(19) Europäisches Patentamt / European Patent Office / Office européen des brevets

(11) **EP 4 032 861 A1**

(12) **EUROPEAN PATENT APPLICATION**

(43) Date of publication:
**27.07.2022 Bulletin 2022/30**

(21) Application number: **21214506.4**

(22) Date of filing: **14.12.2021**

(51) International Patent Classification (IPC):
**C01G 53/00** (2006.01)    **H01M 4/525** (2010.01)

(52) Cooperative Patent Classification (CPC):
**C01G 53/006; C01G 53/50; H01M 4/525;**
C01P 2002/72; C01P 2002/74; C01P 2002/76;
C01P 2002/77; C01P 2004/03; C01P 2004/61

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.01.2021 KR 20210009565**

(71) Applicant: **Samsung SDI Co., Ltd.**
**Yongin-si, Gyeonggi-do 17084 (KR)**

(72) Inventors:
• **KIM, Sungsoo**
  **17084 Yongin-si (KR)**

• **KIM, Jongmin**
  **17084 Yongin-si (KR)**
• **KIM, Soohyeon**
  **17084 Yongin-si (KR)**
• **YANG, Wooyoung**
  **17084 Yongin-si (KR)**
• **LEE, Jangwook**
  **17084 Yongin-si (KR)**
• **CHOI, Seungyeon**
  **17084 Yongin-si (KR)**
• **YOU, Yongchan**
  **17084 Yongin-si (KR)**

(74) Representative: **Shearman, James Ward**
**Marks & Clerk LLP**
**15 Fetter Lane**
**London EC4A 1BW (GB)**

(54) **NICKEL-BASED METAL OXIDE FOR LITHIUM SECONDARY BATTERY, NICKEL-BASED ACTIVE MATERIAL FORMED FROM THE NICKEL-BASED METAL OXIDE, METHOD OF PREPARING THE SAME, AND LITHIUM SECONDARY BATTERY INCLUDING CATHODE INCLUDING THE NICKEL-BASED ACTIVE MATERIAL**

(57) A nickel-based metal oxide for a lithium secondary battery, a nickel-based active material obtained from the nickel-based metal oxide, a method of preparing the nickel-based metal oxide, and a lithium secondary battery including the nickel-based metal oxide as a cathode are provided. The nickel-based metal oxide for a lithium secondary battery includes a cubic composite phase, wherein the cubic composite phase includes a metal oxide phase represented by Formula 1 and a metal oxide phase represented by Formula 2:

Formula 1        $Ni_{1-x-z-k}M_kLi_xCo_zO_{1-y}$,

wherein, in Formula 1, M is at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), $0 \leq x \leq 0.1$, $0 \leq y \leq 0.1$, $0 \leq z \leq 0.5$, and $0 \leq k \leq 0.5$

Formula 2        $Ni_{6-x-z-k}M_kLi_xCo_zMnO_{8-y}$,

and wherein, in Formula 2, M is at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), $0 \leq x \leq 0.1$, $0 \leq y \leq 0.1$, $0 \leq z \leq 0.5$, and $0 \leq k \leq 0.5$, and the case where x of Formula 1 and x of Formula 2 are 0 at the same time is excluded.

EP 4 032 861 A1

# FIG. 1E

**Description**

**BACKGROUND**

**1. Field**

One or more embodiments relate to a nickel-based metal oxide for a lithium secondary battery, a nickel-based active material for a lithium secondary battery formed from the nickel-based metal oxide, a method of preparing the nickel-based metal oxide, a method of preparing the nickel-based lithium active material, and a lithium secondary battery including a cathode including the nickel-based active material.

**2. Description of the Related Art**

With the development of portable electronic devices and communication devices, there is a great interest in the development of lithium secondary batteries having high energy density. However, a lithium secondary battery having high energy density may have poor safety, and thus there is a desire to improve its safety.

As a cathode active material of a lithium secondary battery, a lithium nickel manganese cobalt composite oxide and/or a lithium cobalt oxide may be utilized.

In order to prepare a lithium secondary battery having improved lifespan characteristics, a method of utilizing a cathode including a single-crystal cathode active material has been proposed.

However, single-crystal cathode active materials of the related art exhibit aggregation (e.g., coagulation) of particles, a decrease in productivity, an increase in residual lithium, and a decrease in capacity and efficiency in the process of manufacturing the cathode active material, and thus improvement thereof is desired.

**SUMMARY**

An aspect according to one or more embodiments is directed toward a novel nickel-based metal oxide for a lithium secondary battery.

An aspect according to one or more embodiments is directed toward a method of preparing the nickel-based metal oxide.

An aspect according to one or more embodiments is directed toward a method of preparing a nickel-based active material for a lithium secondary battery utilizing the nickel-based metal oxide for a lithium secondary battery.

An aspect according to one or more embodiments is directed toward a nickel-based active material for a lithium secondary battery which suppresses aggregation of particles and has a reduced amount of residual lithium without being washed according to the method described above.

An aspect according to one or more embodiments is directed toward a lithium secondary battery including a cathode including the nickel-based active material.

Additional aspects will be set forth in part in the description which follows and, in part, will be apparent from the description, or may be learned by practice of the presented embodiments of the disclosure.

According to one or more embodiments, a nickel-based metal oxide for a lithium secondary battery includes a cubic composite phase,

wherein the cubic composite phase includes a metal oxide phase represented by Formula 1 and a metal oxide phase represented by Formula 2.

$$\text{Formula 1} \qquad Ni_{1-x-z-k}M_kLi_xCo_zO_{1-y},$$

wherein, in Formula 1, M is at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), $0 \le x \le 0.1$, $0 \le y \le 0.1$, $0 \le z \le 0.5$, and $0 \le k \le 0.5$

$$\text{Formula 2} \qquad Ni_{6-x-z-k}M_kLi_xCo_zMnO_{8-y}, \text{ and}$$

wherein, in Formula 2, M is at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), $0 \le x \le 0.1$, $0 \le y \le 0.1$, $0 \le z \le 0.5$, and $0 \le k \le 0.5$, and the case where x of Formula 1 and x of Formula 2 are 0 at the same time is excluded.

According to one or more embodiments, a nickel-based active material for a lithium secondary battery is a heat-treated product of a mixture of the nickel-based metal oxide and a lithium precursor, wherein an amount of nickel in the nickel-based active material among all metals (e.g., all metal elements) other than lithium is about 60 mol% or more, and the nickel-based active material is a compound represented by Formula 5.

$$\text{Formula 5} \qquad Li_a(Ni_{1-x-y-z}Co_xMn_yM_z)O_{2\pm\alpha1}$$

In Formula 5, M is at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), and

$0.95 \le a \le 1.1$, $0.6 \le (1-x-y-z) < 1$, $0 < x \le 0.4$, $0 \le y < 0.4$, $0 \le z < 0.4$, and $0 \le \alpha1 \le 0.1$.

In X-ray diffraction analysis of the nickel-based active material for a lithium secondary battery, a full width at half maximum (FWHM) (003) is at about 0.11° to about 0.14°, and a ratio of FWHM (003) / FWHM (104) is at about 0.55 to about 0.83.

According to one or more embodiments, a method of preparing a nickel-based metal oxide for a lithium secondary battery includes mixing a nickel-based active material precursor and a lithium precursor to obtain a first mixture, wherein an amount of nickel in the nickel-based active material precursor is about 60 mol% or more based on a total mole amount of metals in the nickel-based active material precursor; and

performing a first heat-treatment on the first mixture in an oxidizing gas atmosphere to obtain the nickel-based metal oxide,

wherein a mixing molar ratio (Li/Me) of lithium (Li) and all metals (Me) excluding lithium in the first mixture is in a range of about 0.2 to about 0.4.

According to one or more embodiments, a method of preparing a nickel-based active material for a lithium secondary battery includes mixing a nickel-based active material precursor and a first lithium precursor to obtain a first mixture, wherein an amount of nickel in the nickel-based active material precursor is about 60 mol% or more based on a total mole amount of metals in the nickel-based active material precursor;

performing a first heat-treatment on the first mixture in an oxidizing gas atmosphere to obtain a nickel-based metal oxide;

mixing the nickel-based metal oxide and a second lithium precursor to obtain a second mixture; and

performing a second heat-treatment on the second mixture in an oxidizing gas atmosphere,

wherein a mixing molar ratio of lithium and all metals excluding lithium in the first mixture is in a range of about 0.2 to about 0.4, and

a mixing molar ratio of lithium and all metals excluding lithium in the second mixture is in a range of about 0.6 to about 1.1.

According to one or more embodiments, a lithium secondary battery includes a cathode including the nickel-based active material for a lithium secondary battery, an anode, and an electrolyte between the cathode and the anode.

At least some of the above and other features of the invention are set out in the claims.

**BRIEF DESCRIPTION OF THE DRAWINGS**

The above and other aspects, features, and enhancements of certain embodiments of the disclosure will be more apparent from the following description taken in conjunction with the accompanying drawings, in which:

FIG. 1A is a schematic view of a crystalline structure of NiO, which is one of the rock salt cubic phases;

FIG. 1B is a schematic view of a crystalline structure of $Ni_6MnO_8$, which is one of the ordered rock salt cubic phases;

FIG. 1C shows an X-ray diffraction analysis spectrum of NiO, which is one of the rock salt cubic phases;

FIG. 1D shows an X-ray diffraction analysis spectrum of $Ni_6MnO_8$, which is one of the ordered rock salt cubic phases;

FIG. 1E is an X-ray diffraction analysis graph of a nickel-based metal oxide for a lithium secondary battery prepared in Example 1;

FIG. 1F is an X-ray diffraction analysis graph of a nickel-based metal oxide for a lithium secondary battery prepared in Comparative Example 4;

FIG. 1G illustrates a crystalline structure of an ordered rock salt cubic phase;

FIG. 1H illustrates a crystalline structure of a rock salt cubic phase;

FIG. 2 is a graph showing the capacity retention ratio characteristics of coin cells prepared in Manufacture Examples 1 to 3 and Comparative Manufacture Example 1;

FIG. 3 is a graph showing the battery capacities and charge/discharge efficiencies of the coin cells prepared in Manufacture Examples 1 to 3 and Comparative Manufacture Example 1;

FIG. 4 is a schematic view of a lithium secondary battery according to an embodiment;

FIG. 5A is a scanning electron microscope (SEM) image of a nickel-based metal oxide of Example 2;

FIG. 5B is an SEM image of a nickel-based active material of Example 2;

FIG. 5C shows the result of X-ray diffraction analysis of a nickel-based metal oxide, which is a first calcined material obtained according to Example 2;

FIG. 6A is an SEM image of a nickel-based metal oxide of Example 3;

FIG. 6B is an SEM image of a nickel-based active material of Example 3;

FIG. 6C shows the result of X-ray diffraction analysis of a nickel-based metal oxide, which is a first calcined material of Example 3;

FIG. 7A is an SEM image of a nickel-based metal oxide of Example 4;

FIG. 7B is an SEM image of a nickel-based active material of Example 4;

FIG. 7C shows the result of X-ray diffraction analysis of a nickel-based metal oxide, which is a first calcined material of Example 4;

FIG. 8A is an SEM image of a nickel-based metal oxide of Comparative Example 3-3;

FIG. 8B is an SEM image of a nickel-based active material of Comparative Example 3-3;

FIG. 9A is an SEM image of a nickel-based metal oxide of Comparative Example 3-1;

FIG. 9B is an SEM image of a nickel-based active material of Comparative Example 3-1;

FIG. 9C shows the result of X-ray diffraction analysis of a nickel-based metal oxide, which is a first calcined material of Comparative Example 3-1;

FIG. 10A is an SEM image of a nickel-based metal oxide of Comparative Example 3-2;

FIG. 10B is an SEM image of a nickel-based active material of Comparative Example 3-2;

FIG. 10C shows the result of X-ray diffraction analysis of a nickel-based metal oxide, which is a first calcined material of Comparative Example 3-2;

FIG. 10D shows the result of X-ray diffraction analysis of a nickel-based metal oxide, which is a first calcined material of Comparative Example 3-3;

FIG. 11 is an SEM image of the nickel-based active material of Example 5; and

FIG. 12 is a graph that shows capacity retention ratio characteristics of lithium secondary batteries prepared in Manufacture Examples 2, 3, 4, and 6 and Comparative Manufacture Example 5.

## DETAILED DESCRIPTION

Reference will now be made in more detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, according to one or more embodiments, a nickel-based metal oxide for a lithium secondary battery according to an embodiment, a nickel-based active material prepared from the nickel-based metal oxide, a method of preparing the nickel-based metal oxide, a method of preparing the nickel-based active material, and a lithium secondary battery including a cathode including the nickel-based lithium metal active material will be described in further detail.

According to an embodiment, a nickel-based metal oxide for a lithium secondary battery includes a cubic composite phase, wherein the cubic composite phase includes a metal oxide phase represented by Formula 1 and a metal oxide phase represented by Formula 2.

$$\text{Formula 1} \qquad Ni_{1-x-z-k}M_kLi_xCo_zO_{1-y},$$

wherein, in Formula 1, M is at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), $0 \leq x \leq 0.1$, $0 \leq y \leq 0.1$, $0 \leq z \leq 0.5$, and $0 \leq k \leq 0.5$

$$\text{Formula 2} \qquad Ni_{6-x-z-k}M_kLi_xCo_zMnO_{8-y}, \text{ and}$$

wherein, in Formula 2, M is at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), $0 \leq x \leq 0.1$, $0 \leq y \leq 0.1$, $0 \leq z \leq 0.5$, and $0 \leq k \leq 0.5$, and the case where x of Formula 1 and x of Formula 2 are 0 at the same time is excluded.

The metal oxide phase represented by Formula 1 is a rock salt cubic phase, and the metal oxide phase represented by Formula 2 is an ordered rock salt cubic phase.

In some embodiments, in Formulae 1 and 2, x and y may each independently be 0 or in a range of about 0.01 to about 0.08, about 0.01 to about 0.07, about 0.01 to about 0.06, or about 0.01 to about 0.05. In Formulae 1 and 2, z may satisfy $0 \leq z \leq 0.3$, $0 \leq z \leq 0.2$, $0 \leq z \leq 0.1$, or may be 0.

In Formulae 1 and 2, k may be 0.

An amount of nickel in the nickel-based metal oxide may be in a range of about 60 mol% or more, for example, about 60 mol% to about 96 mol%.

A nickel-based metal oxide according to another embodiment includes a metal oxide phase represented by Formula 1-1 and a metal oxide phase represented by Formula 2-1, wherein the nickel-based metal oxide is a single-crystal particle.

The metal oxide phase represented by Formula 1-1 and the metal oxide phase represented by Formula 2-1 are the same as the metal oxide phase of Formula 1 and the metal oxide phase of Formula 2, respectively, except that the metal oxide phase represented by Formula 1-1 and the metal oxide phase represented by Formula 2-1 do not contain cobalt. Here, the metal oxide phase represented by Formula 1-1 is a rock salt cubic phase, and the metal oxide phase represented by Formula 2-1 is an ordered rock salt cubic phase.

$$\text{Formula 1-1} \qquad Ni_{1-x}Li_xO_{1-y}$$

In Formula 1-1, $0 \leq x \leq 0.1$, and $0 \leq y \leq 0.1$.

$$\text{Formula 2-1} \qquad Ni_{6-x}Li_xMnO_{8-y}$$

In Formula 2-1, $0 \leq x \leq 0.1$, and $0 \leq y \leq 0.1$.

In Formulae 1-1 and 2-1, x, and y may each independently be 0. In Formulae 1-1 and 2-1, x, and y may each independently be a number greater than 0. In Formulae 1-1 and 2-1, x, and y may each independently be in a range of about 0.01 to about 0.08, about 0.01 to about 0.07, about 0.01 to about 0.06, or about 0.01 to about 0.05.

When the nickel-based metal oxide according to an embodiment includes a metal other than (or in addition to) cobalt, the metal may be partially substituted at the position of cobalt (e.g., in the structure originated from a cobalt containing nickel-based metal oxide).

The metal oxide phase represented by Formula 1 may be, for example, $NiLi_xO$ ($x \geq 0$) or $Ni_{0.5}Co_{0.5}O$, and the metal oxide phase represented by Formula 2 may be, for example, $Ni_6Li_xMnO_8$ ($x \geq 0$).

The single-crystal particle may be a single crystal having a size in a range of about 1 $\mu$m to about 5 $\mu$m, an agglomerate of primary particles, or a combination thereof, and a size of the primary particles may be in a range of about 1 $\mu$m to about 5 $\mu$m. The single-crystal particle may be a one-body particle. A size of the agglomerate may be in a range of about 1 $\mu$m to about 9 $\mu$m. In one embodiment, a size of the nickel-based metal oxide for a lithium secondary battery may be, for example, in a range of about 1 $\mu$m to about 9 $\mu$m, about 2 $\mu$m to about 7 $\mu$m, or, about 3 $\mu$m to about 6 $\mu$m. Here, the size refers to a size of the secondary particle. In some embodiments, a size of the secondary particle may be in a range of about 1 $\mu$m to about 5 $\mu$m.

Single crystals are substantially monolithic particles, but are often observed in an aggregated form.

As used herein, when a particle is spherical, the term "size" refers to a particle diameter. The particle diameter may be confirmed (e.g., obtained) by a scanning electron microscope (SEM) or a particle size meter. When a particle is non-spherical, the term "size" refers to the length of a long-axis. The length of the long-axis may be measured by SEM, or the like. The particle diameter may be an average particle diameter, and the length of a long-axis may be an average length of a long-axis.

The average particle diameter and average long-axis length refer to the average value of the measured particle diameters and the average value of the measured long-axis lengths.

In order to improve lifespan characteristics of a lithium secondary battery, a single-crystal cathode active material may be used as a cathode active material. The single-crystal cathode active material is generally prepared by adding an excessive amount of lithium and undergoing a high-temperature heat-treatment process. When the single-crystal cathode active material undergoes a high-temperature heat-treatment process, particles are agglomerated, and the excessive amount of lithium may increase the amount of residual lithium of the cathode active material. As a result, a capacity and charge/discharge efficiency of a lithium secondary battery including a cathode including the single-crystal cathode active material may be deteriorated.

Therefore, the present disclosure of the present inventive entity is intended to provide a nickel-based metal oxide having a cubic composite phase and a single-crystal cathode active material obtained therefrom that can resolve the problems of the single-crystal cathode active material described above. The nickel-based metal oxide is a first heat-treated product prepared by adding a partial amount of lithium (e.g., a fraction of a target amount lithium in the final product) during a first heat-treatment.

According to one or more embodiments, a nickel-based metal oxide for a lithium secondary battery has a cubic composite phase by adding a partial amount of lithium during a first heat-treatment performed on a mixture of a nickel-based metal oxide precursor and a lithium precursor. The cubic composite phase includes a rock salt cubic phase and an ordered rock salt cubic phase. A single-crystal nickel-based active material for a lithium secondary battery having a layered structure may be prepared by grain growth of the nickel-based metal oxide for a lithium secondary battery and then further adding (e.g., additional) lithium. The nickel-based active material for a lithium secondary battery is a single-crystal active material that has single-crystal characteristics and is capable of suppressing aggregation of particles, improving productivity, and having a low amount of residual lithium without being washed (e.g., without the need for a washing process to remove excess lithium). When the nickel-based active material for a lithium secondary battery is utilized, a lithium secondary battery having reduced gas generation and a long lifespan may be prepared.

The nickel-based metal oxide according to an embodiment may have at least two (e.g., two or more) phases. Also, a mixing ratio of the phases may change according to a ratio of first added lithium (e.g., according to the amount of the first added lithium), and a capacity and lifespan characteristics of a lithium secondary battery including a cathode including a nickel-based active material prepared utilizing the nickel-based metal oxide may change as well.

In the nickel-based metal oxide, a molar mixing ratio of the metal oxide phase represented by Formula 1 and the metal oxide phase represented by Formula 2 may be, for example, in a range of about 1:9 to about 9:1, about 3:7 to about 7:3, or about 5:5. Here, the presence and the mixing molar ratio of the metal oxide phase represented by Formula 1 and the metal oxide phase represented by Formula 2 may be confirmed by X-ray diffraction (XRD) analysis.

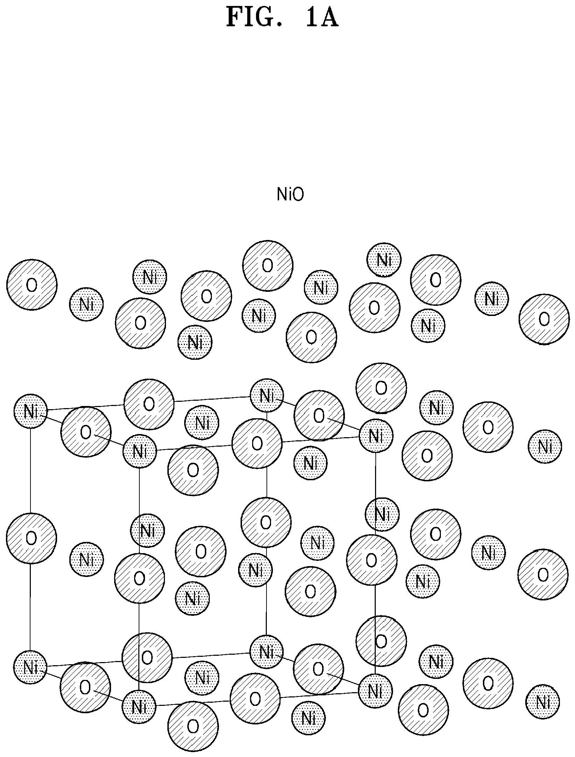

As used herein, the "rock salt cubic phase" has a crystal structure of which a space group is Fm-3m. The crystal structure of NiO, which is one of the rock salt cubic phases, is shown in FIG. 1A.

As used herein, the "ordered rock salt cubic phase" includes a nickel layer and a manganese layer in an oxygen crystal lattice and has a crystal structure of which a space group is Fm-3m.

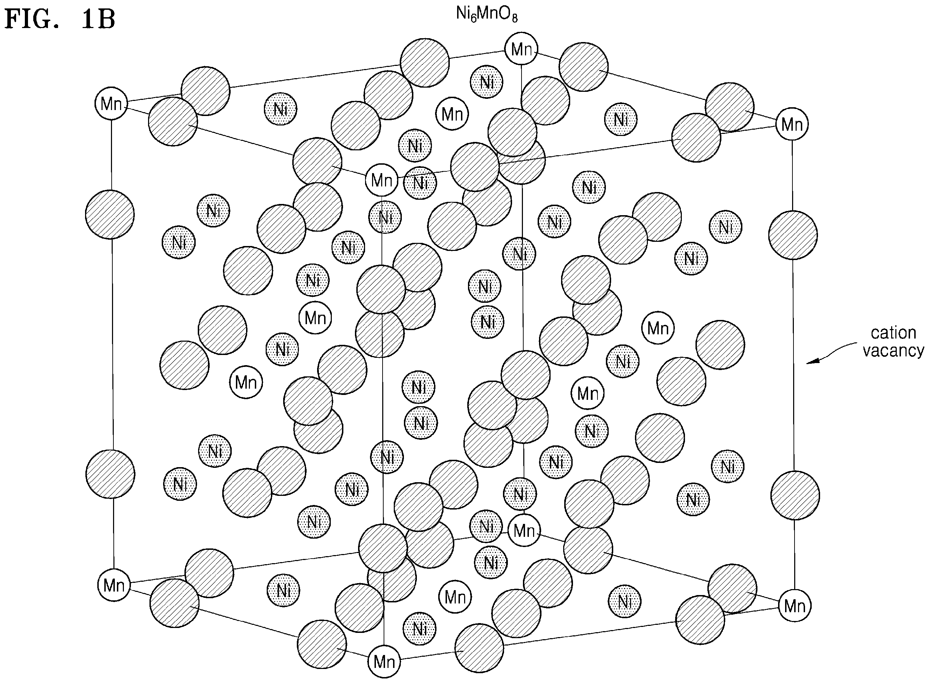

A crystal structure of $Ni_6MnO_8$, which is one of the metal oxides having an ordered rock salt cubic phase, is shown in FIG. 1B. $Ni_6MnO_8$ is derived from a NiO structure, and is formed by ordering of Ni and Mn atoms and cation vacancies in an 8-fold rock salt unit cell.

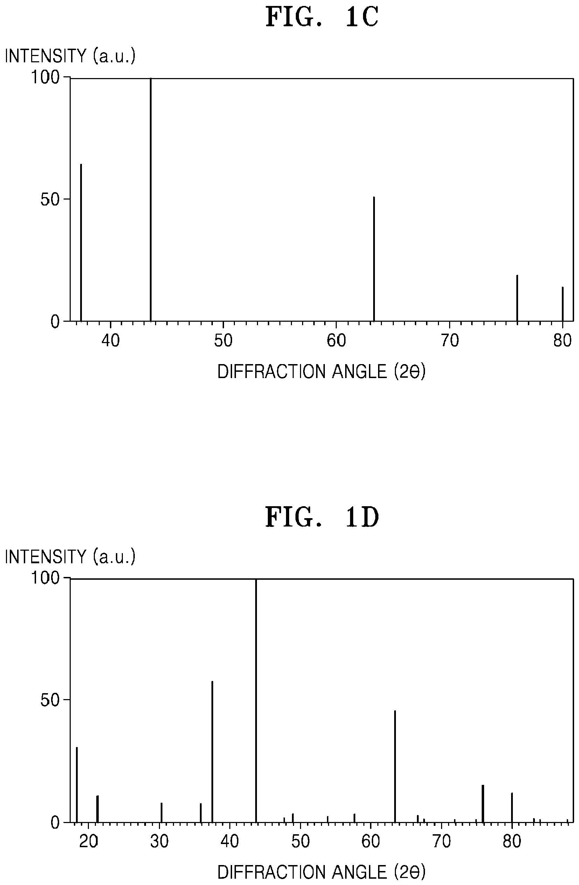

The results of XRD analysis of NiO and $Ni_6MnO_8$ are shown in FIGS. 1C and 1D and Table 1. FIG. 1C is the XRD results of NiO, and FIG. 1D is the XRD results of $Ni_6MnO_8$.

Table 1

| Sample | Ordered rock salt cubic phase $Ni_6MnO_8$ | | | Rock salt cubic phase NiO | | |
|---|---|---|---|---|---|---|
| DOE | a | Wt% | Size (Å) | a | Wt% | Size (Å) |
| 0.2 | 8.3209 | 97 | 150 | 4.1722 | 3 | >500 |
| 0.25 | 8.3179 | 72 | 90 | 4.1606 | 28 | >500 |

In Table 1, the size represents a particle diameter when $Ni_6MnO_8$ and NiO are spherical or represents a long-axis length when $Ni_6MnO_8$ and NiO are non-spherical. DOE represents Design of experiments, and a represents a crystallographic parameter, and a lattice parameter obtained from the XRD analysis result.

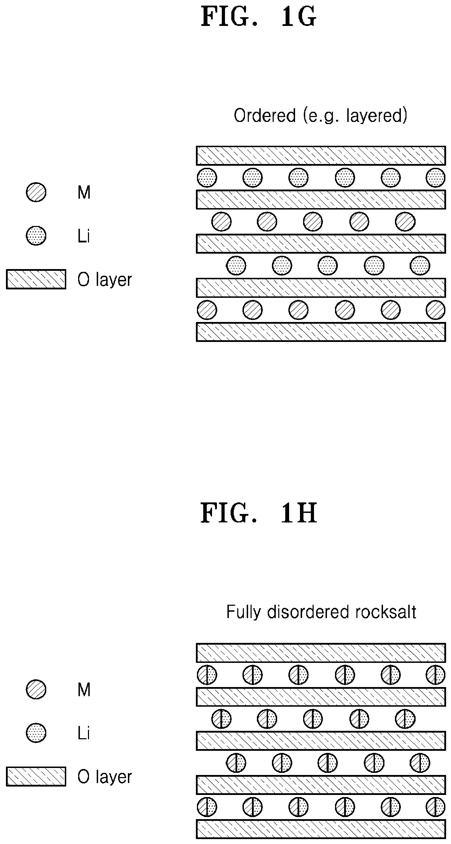

Also, the rock salt cubic phase has a crystal structure in which sites of lithium and all metals (e.g., all metal elements) other than lithium are not distinguished. In the rock salt cubic phase, oxygen (O) occupies a face centered cubic (FCC) lattice site, and lithium and all metals (e.g., all metal elements (M)) other than lithium at a ratio of about 1:1 occupy an octahedral site (see FIG. 1H).

On the other hand, in the ordered rock salt cubic phase, sites of lithium and all metals (e.g., all metal elements (M)) other than lithium are distinguished, the metal element (M) occupies an octahedral site, and oxygen (O) occupies a FCC site (see FIG. 1G). When the XRD analysis is performed on the ordered rock salt cubic phase, peaks at which a diffraction angle 2θ is about 18° are observed. These peaks are not observed in the XRD analysis result of the rock salt cubic phase described above.

When the nickel-based metal oxide having these characteristics is utilized, a single-crystal nickel-based active material for a lithium secondary battery having reduced gas generation and a small amount of residual lithium without being washed may be prepared. Here, the nickel-based active material being a single crystal may be confirmed through a high resolution transmission electron microscope (HRTEM).

In the XRD analysis of the nickel-based metal oxide for a lithium secondary battery according to an embodiment, a main peak appears at which the diffraction angle 2θ is in a range of about 42° to about 44°, and a minor peak appears at which the diffraction angle 2θ is in a range of about 18° to about 20°. Here, the main peak is a peak that has the maximum intensity, and the minor peak is a peak having an intensity less than that of the main peak.

An intensity ratio ($I_A/I_B$) of the main peak (A) to the minor peak (B) is in a range of about 7 to about 9.5 or about 7.14 to about 9.4. Also, a full width at half maximum (FWHM) of the main peak is in a range of about 0.13° to about 0.36°, and a FWHM of the minor peak is in a range of about 0.09° to about 0.15°.

When the nickel-based metal oxide for a lithium secondary battery according to an embodiment is utilized, a nickel-based active material for a lithium secondary battery in a single-crystal state may be prepared.

According to another embodiment, a method of preparing a nickel-based metal oxide for a lithium secondary battery may be as follows.

First, a nickel-based active material precursor for a lithium secondary battery and a first lithium precursor are mixed to prepare a first mixture, wherein an amount of nickel in the nickel-based active material precursor is about 60 mol% or more based on a total mole amount of metals in the nickel-based active material precursor.

The first mixture is first heat-treated in an oxidizing gas atmosphere to prepare a nickel-based metal oxide for a lithium secondary battery. The first heat-treatment may be performed at a temperature in a range of, for example, about 800 °C to about 1200 °C, about 950 °C to about 1200 °C, or, for example, at a temperature of about 1000 °C.

A molar mixing ratio (Li/Me) of lithium and all metals excluding lithium (e.g., all other metals) in the first mixture may be controlled to be in a range of about 0.2 to about 0.4. When the molar mixing ratio of lithium and a metal is within this range, a nickel-based metal oxide for a lithium secondary battery may have a cubic composite phase. Here, the cubic composite phase may include the rock salt cubic phase and the ordered rock salt cubic phase described above.

The oxidizing gas atmosphere may be, for example, air atmosphere or oxygen (e.g., oxygen rich) atmosphere. The oxygen atmosphere may have an oxygen content of about 90 vol% or more, and the remainder may be an inert gas. Here, the inert gas may be nitrogen, helium, argon, or a combination thereof.

The oxygen atmosphere may utilize an oxidizing gas such as oxygen or air, and, for example, the oxidizing gas may be formed of about 10 vol% to about 20 vol% of oxygen or air and about 80 vol% to about 90 vol% of the inert gas.

The first lithium precursor may be, for example, lithium hydroxide, lithium fluoride, lithium carbonate, or a mixture thereof. A mixing ratio of the lithium precursor and the nickel-based active material precursor for a lithium secondary battery may be stoichiometrically controlled to prepare the desired nickel-based active material for a lithium secondary battery.

The mixing may be dry mixing or may be performed utilizing a mixer. The dry mixing may be performed by milling. Although conditions of the milling are not particularly limited, the milling may be performed in a way such that a precursor utilized as a starting material barely undergoes deformation such as pulverization. A size of the first lithium precursor to be mixed with the nickel-based active material precursor for a lithium secondary battery may be controlled in advanced (e.g., prior to the mixing process). The size (average particle diameter) of the first lithium precursor may be in a range of about 5 μm to about 15 μm or, for example, about 10 μm. When the first lithium precursor having such a size is milled with the nickel-based active material precursor at a rate of about 300 rpm to about 3,000 rpm, a desired mixture may be obtained. When the temperature in the mixer rises to about 30 °C or higher in the milling process, a cooling process may be performed to maintain the temperature in the mixer at room temperature (25 °C).

An amount of nickel in the nickel-based active material precursor for a lithium secondary battery may be, for example, in a range of about 60 mol% to about 96 mol% or about 60 mol% to about 85 mol% based on a total mole amount of metals in the nickel-based active material precursor. Also, the nickel-based active material precursor for a lithium secondary battery may be a secondary particle that is an agglomerate of primary particles, and a size of the secondary particle is in a range of about 2 um to about 5 um.

According to another embodiment, a method of preparing a nickel-based active material for a lithium secondary battery utilizing the nickel-based metal oxide for a lithium secondary battery will be described. The nickel-based active material for a lithium secondary battery may be in a single particle state having a size in a range of about 3 μm to about 6 μm.

The method of preparing the nickel-based active material for a lithium secondary battery may include adding a second lithium precursor to the nickel-based metal oxide for a lithium secondary battery to obtain a second mixture. In the second mixture, a molar mixing ratio of lithium and all metals excluding lithium (e.g., all other metals) may be controlled to be in a range of about 0.60 to about 1.1, about 0.60 to about 0.95, about 0.7 to about 0.9, or about 0.75 to about 0.85, and the second mixture may be second calcined in an oxidizing gas atmosphere at a temperature in a range of about 600 °C to about 1000 °C, for example, about 800 °C to about 900 °C.

The second lithium precursor may be the same as (e.g., identical to) the first lithium precursor.

A molar ratio of Li/Me in the nickel-based active material obtained according to these processes may be in a range of about 0.95 to about 1.1, about 1 to about 1.1 or, for example, about 1.05.

The nickel-based active material precursor may be a compound represented by Formula 3, a compound represented by Formula 4, or a combination thereof.

Formula 3 $\quad\quad Ni_{1-x-y-z}Co_xMn_yM_z(OH)_2$

Formula 4     $Ni_{1-x-y-z}Co_xMn_yM_zO$

In Formulae 3 and 4, M is at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), and

$0.6 \leq (1-x-y-z) < 1$, $0 < x \leq 0.4$, $0 \leq y \leq 0.4$, and $0 \leq z \leq 0.4$.

In some embodiments, in Formula 3, $0 < x \leq 1/3$, $0 \leq y \leq 0.3$, $0 \leq z \leq 0.05$, and $0.6 \leq (1-x-y-z) \leq 0.95$.

In some embodiments, in Formula 3, x may be in a range of about 0.1 to about 0.3, y may be in a range of about 0.05 to about 0.3, and z may be 0.

An amount of nickel in the nickel-based active material precursor of Formula 3 may be in a range of about 60 mol% to about 96 mol% or, for example, about 70 mol% to about 95 mol%.

The nickel-based active material precursor may be, for example, $Ni_{0.92}Co_{0.05}Al_{0.03}(OH)_2$, $Ni_{0.94}Co_{0.03}Al_{0.03}(OH)_2$, $Ni_{0.88}Co_{0.06}Al_{0.06}(OH)_2$, $Ni_{0.96}Co_{0.02}Al_{0.02}(OH)_2$, $Ni_{0.93}Co_{0.04}Al_{0.03}(OH)_2$, $Ni_{0.8}Co_{0.15}Al_{0.05}(OH)_2$, $Ni_{0.75}Co_{0.20}Al_{0.05}(OH)_2$, $Ni_{0.92}Co_{0.05}Mn_{0.03}(OH)_2$, $Ni_{0.94}Co_{0.03}Mn_{0.03}(OH)_2$, $Ni_{0.88}Co_{0.06}Mn_{0.06}(OH)_2$, $Ni_{0.96}Co_{0.02}Mn_{0.02}(OH)_2$, $Ni_{0.93}Co_{0.04}Mn_{0.03}(OH)_2$, $Ni_{0.8}Co_{0.15}Mn_{0.05}(OH)_2$, $Ni_{0.75}Co_{0.20}Mn_{0.05}(OH)_2$, $Ni_{0.6}Co_{0.2}Mn_{0.2}(OH)_2$, $Ni_{0.7}Co_{0.15}Mn_{0.15}(OH)_2$, $Ni_{0.7}Co_{0.1}Mn_{0.2}(OH)_2$, $Ni_{0.8}Co_{0.1}Mn_{0.1}(OH)_2$, $Ni_{0.75}Co_{0.1}Mn_{0.15}(OH)_2$, or $Ni_{0.85}Co_{0.1}Al_{0.05}(OH)_2$.

The nickel-based active material precursor for a lithium secondary battery may be prepared by coprecipitation of a mixture including a metal raw material (e.g., a precursor material) such as a nickel precursor, a cobalt precursor, a manganese precursor, and/or precursor(s) of other metal(s), complexing agent(s), and/or pH adjuster(s).

In consideration of a composition of the nickel-based active material precursor, the metal raw material may be a metal precursor corresponding to the nickel-based active material precursor. The metal raw material may be, for example, a metal carbonate, a metal sulfate, a metal nitrate, and/or a metal chloride, but embodiments are not limited thereto, and any material available as a metal precursor in the related art may be utilized.

The nickel precursor may be nickel sulfate, nickel chloride, and/or nickel nitrate. Also, the cobalt precursor may be cobalt sulfate, cobalt chloride, and/or cobalt nitrate, and the manganese precursor may be manganese sulfate, manganese chloride, and/or manganese nitrate.

Amounts of the metal raw materials may be stoichiometrically controlled to obtain the desired nickel-based active material precursor.

The pH adjuster decreases a solubility of a metal ion in a reactor to precipitate the metal ion as hydroxide. The pH adjuster may be, for example, ammonium hydroxide, sodium hydroxide (NaOH), and/or sodium carbonate ($Na_2CO_3$). In some embodiments, the pH adjuster may be, for example, sodium hydroxide (NaOH).

The complexing agent controls a precipitation formation rate in a coprecipitation reaction. The complexing agent may be, for example, ammonium hydroxide ($NH_4OH$) (ammonia water), citric acid, acrylic acid, tartaric acid, and/or glycolic acid. An amount of the complexing agent may be utilized at a suitable (e.g., general) level. The complexing agent may be, for example, ammonia water.

The product of the coprecipitation reaction is washed and then dried to obtain the desired nickel-based active material precursor for a lithium secondary battery. Here, the drying is performed under suitable (e.g., general) conditions.

A nickel-based active material for a lithium secondary battery according to another embodiment is obtained from the nickel-based active material precursor for a lithium secondary battery. The nickel-based active material is in a single-crystal state.

When the nickel-based active material has a single crystal structure and is grown by controlling the Li/Me ratio, the nickel-based active material has a small surface area and thus the content of residual lithium is small, thereby improving the lifespan of the lithium battery. Also, because the nickel-based active material has a single particle structure, a stable crystal structure may be maintained during a charging/discharging process, and thus there may be no rapid decrease in capacity according to change in the crystal structure. The nickel-based active material for a lithium secondary battery may be a compound represented by Formula 5.

Formula 5     $Li_a(Ni_{1-x-y-z}Co_xMn_yM_z)O_{2\pm\alpha 1}$

In Formula 5, M is at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), and

$0.95 \leq a \leq 1.1$, $0.6 \leq (1-x-y-z) < 1$, $0 < x \leq 0.4$, $0 \leq y < 0.4$, $0 \leq z < 0.4$, and $0 \leq \alpha 1 \leq 0.1$.

The nickel-based active material may be a single-crystal particle or, for example, a secondary particle that is an agglomerate of primary particles. Here, a size (e.g., an average size or diameter) of the primary particles may be in a range of about 1 μm to about 5 μm or about 1 μm to about 3 μm, and a size (e.g., an average size or diameter) of the secondary particle may be in a range of about 2.5 μm to about 9 μm or about 2.5 μm to about 6 μm.

In the XRD analysis of the nickel-based active material, a full width at half maximum (FWHM) (003) is in a range of about 0.11° to about 0.14°, about 0.12° to about 0.14°, or about 0.1237° to about 0.1310°, and a FWHM (003/104) (e.g., a ratio FWHM (003)/FWHM(104)) is in a range of about 0.55 to about 0.83, about 0.6 to about 0.83, or about 0.6211 to about 0.8280.

In Formula 5, the sum of mole fractions of Ni, Co, Mn, and M is 1.

In Formula 5, an amount of nickel may be, for example, in a range of about 60 mol% to about 96 mol% based on a total mole amount of all metals excluding lithium in the nickel-based active material.

In the nickel-based active material of Formula 5, the amount of nickel may be greater than each of the other metals based on 1 mole of the total amount of the transition metals (e.g. all metals excluding lithium). When the nickel-based active material having such a high Ni content is utilized, the degree of lithium diffusion increases, conductivity increases, and higher capacity may be obtained at the same voltage in a lithium secondary battery including a cathode including the nickel-based active material.

In some embodiments, in Formula 5, $0 < x \leq 0.3$, $0 \leq y \leq 0.3$, and $0 \leq z \leq 0.05$. In Formula 5, for example, a may be in a range of about 1 to about 1.1, x may be in a range of about 0.1 to about 0.3, and y may be in a range of about 0.05 to about 0.3. In some embodiments, z in Formula 5 may be 0.

In some embodiments, in Formula 5, for example, a may be in a range of about 1 to about 1.1, x may be in a range of about 0.1 to about 0.3, y may be in a range of about 0.05 to about 0.3, and z may be 0.

In the nickel-based active material, an amount of nickel may be in a range of about 60 mol% to about 96 mol%, based on the total amount of metals. Here, the total amount of metals refers to the total amount of nickel, cobalt, manganese, and M in Formula 5.

The nickel-based active material may be, for example, $Li_{1.05}Ni_{0.92}Co_{0.05}Al_{0.03}O_2$, $Li_{1.05}Ni_{0.94}Co_{0.03}Al_{0.03}O_2$, $Li_{1.05}Ni_{0.88}Co_{0.06}Al_{0.06}O_2$, $Li_{1.05}Ni_{0.96}Co_{0.02}Al_{0.02}O_2$, $Li_{1.05}Ni_{0.93}Co_{0.04}Al_{0.03}O_2$, $Li_{1.05}Ni_{0.8}Co_{0.15}Al_{0.05}O_2$, $Li_{1.05}Ni_{0.75}Co_{0.20}Al_{0.05}O_2$, $Li_{1.05}Ni_{0.92}Co_{0.05}Mn_{0.03}O_2$, $Li_{1.05}Ni_{0.94}Co_{0.03}Mn_{0.03}O_2$, $Li_{1.05}Ni_{0.88}Co_{0.06}Mn_{0.06}O_2$, $Li_{1.05}Ni_{0.96}Co_{0.02}Mn_{0.02}O_2$, $Li_{1.05}Ni_{0.93}Co_{0.04}Mn_{0.03}O_2$, $Li_{1.05}Ni_{0.8}Co_{0.15}Mn_{0.05}O_2$, $Li_{1.05}Ni_{0.75}Co_{0.20}Mn_{0.05}O_2$, $Li_{1.05}Ni_{0.6}Co_{0.2}Mn_{0.2}O_2$, $Li_{1.05}Ni_{0.7}Co_{0.15}Mn_{0.15}O_2$, $Li_{1.05}Ni_{0.7}Co_{0.1}Mn_{0.2}O_2$, $Li_{1.05}Ni_{0.8}Co_{0.1}Mn_{0.1}O_2$, $Li_{1.05}Ni_{0.75}Co_{0.1}Mn_{0.15}O_2$, or $Li_{1.05}Ni_{0.85}Co_{0.1}Al_{0.05}O_2$.

According to another embodiment, a lithium secondary battery includes a cathode including the nickel-based active material for a lithium secondary battery described above, an anode, and an electrolyte between the cathode and the anode.

When a method of preparing a nickel-based composite cathode active material according to an embodiment is utilized, aggregation of particles may be suppressed, productivity may be increased, and a single-crystal nickel-based active material having a small amount of residual lithium may be prepared without being washed (e.g., without any washing process). Also, when the nickel-based active material is utilized, a lithium secondary battery may have improved capacity characteristics, charge/discharge efficiency, and lifespan.

An amount of residual lithium in the nickel-based active material for a lithium secondary battery according to an embodiment may be less than about 900 ppm.

Hereinafter, a method of preparing a lithium secondary battery having a cathode including the nickel-based active material according to an embodiment, an anode, a non-aqueous electrolyte including a lithium salt, and a separator will be described.

The cathode and the anode are prepared by applying and drying a composition for a cathode active material layer and a composition for an anode active material layer on a cathode current collector and an anode current collector to form a cathode active material layer and an anode active material layer, respectively.

The composition for a cathode active material layer is prepared by mixing a cathode active material, a conducting agent, a binder, and a solvent, and the nickel-based active material according to an embodiment is utilized as the cathode active material.

The binder in the cathode active material layer improves adhesive strength between the cathode active material particles and between the cathode active material and the cathode current collector. Examples of the binder may include (e.g., may be) polyvinylidene fluoride (PVDF), polyvinylidene fluoride and hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene monomer (EPDM) rubber, sulfonated-EPDM rubber, styrene-butadiene rubber (SBR), fluorine rubber, and/or one or more copolymers thereof, and may be utilized either alone or as a mixture of two or more kinds (e.g., types).

The conducting agent may be any suitable material as long as it has electrical conductivity and does not cause a chemical change in the corresponding battery. Examples of the conducting agent may include (e.g., may be) graphite such as natural graphite and/or artificial graphite; a carbonaceous material such as carbon black, acetylene black, ketjen black, channel black, furnace black, lamp black, and/or thermal black; conductive fiber such as carbon fiber and/or metal fiber; fluorocarbon; metal powder such as aluminium powder and/or nickel powder; conductive whisker such as zinc oxide and/or potassium titanate; conductive metal oxide such as titanium oxide; and a conductive material such as a polyphenylene derivative.

An amount of the conducting agent may be in a range of about 1 part to about 10 parts by weight or about 1 part to about 5 parts by weight based on 100 parts by weight of the cathode active material. When the amount of the conducting agent is within these ranges, conductivity characteristics of the final cathode thus obtained may be excellent.

A non-limiting example of the solvent may be N-methylpyrrolidone, and an amount of the solvent may be in a range of about 20 parts to about 200 parts by weight based on 100 parts by weight of the cathode active material. When the amount of the solvent is within this range, a process for forming the cathode active material layer may be easily carried out.

A thickness of the cathode current collector may be in a range of about 3 $\mu$m to about 500 $\mu$m. A material of the cathode current collector is not particularly limited as long as it has electrical conductivity and does not cause a chemical change in the corresponding battery. Examples of the material of the cathode current collector may include (e.g., may be) stainless steel, aluminium, nickel, titanium, calcined carbon, and aluminium or stainless steel that is surface treated with carbon, nickel, titanium, or silver. The cathode current collector may have fine irregularities on a surface thereof to enhance adhesive strength to the cathode active material. The cathode current collector may be in various suitable forms, such as a film, a sheet, a foil, a net, a porous structure, a foam structure, or a non-woven structure.

Also, an anode active material, a binder, and a solvent may be mixed to prepare a composition for an anode active material layer.

The anode active material is a material capable of absorbing and desorbing lithium ions. Examples of the anode active material may include (e.g., may be) a carbonaceous material, such as graphite and/or carbon, a lithium metal, an alloy of a lithium metal, and a silicon oxide-based material. In some embodiments, the anode active material may be a silicon oxide.

Examples of the binder in the anode may include (e.g., may be) polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylate, an ethylene-propylene-diene monomer (EPDM), a sulfonated EPDM, a styrene-butadiene rubber (SBR), a fluorine rubber, poly(acrylic acid), polymer(s) in which hydrogen(s) thereof are substituted with lithium (Li), sodium (Na), and/or calcium (Ca), and/or one or more suitable copolymers thereof.

The anode active material layer may further include a conducting agent. The conducting agent may be any material as long as it has electrical conductivity and does not cause a chemical change in the corresponding battery. Examples of the conducting agent may include (e.g., may be) graphite such as natural graphite and/or artificial graphite; a carbonaceous material such as carbon black, acetylene black, ketjen black, channel black, furnace black, lamp black, and/or thermal black; conductive fiber such as carbon fiber and/or metal fiber; fluorocarbon; metal powder such as aluminium powder and/or nickel powder; conductive whisker such as zinc oxide and/or potassium titanate; conductive metal oxide such as titanium oxide; and conductive materials such as polyphenylene derivatives. In some embodiments, the conducting agent may be, carbon black, for example, carbon black having an average particle diameter of several tens of nanometers.

An amount of the conducting agent may be in a range of about 0.01 parts to about 10 parts by weight or about 0.01 parts to about 5 parts by weight based on 100 parts by weight of the anode active material layer.

The composition for an anode active material layer may further include a thickening agent. As the thickening agent, at least one of carboxymethyl cellulose (CMC), carboxyethyl cellulose, starches, regenerated cellulose, ethyl cellulose, hydroxylmethyl cellulose, hydroxylethyl cellulose, hydroxypropyl cellulose, or polyvinyl alcohol may be utilized. In some embodiments, the thickening agent may be CMC.

An amount of the solvent may be in a range of about 100 parts to about 300 parts by weight based on 100 parts by weight of the total weight of the anode active material. When the amount of the solvent is within this range, a process for forming the anode active material layer may be easily carried out.

A thickness of the anode current collector may generally be in a range of about 3 $\mu$m to about 500 $\mu$m. A material of the anode current collector is not particularly limited as long as it has electrical conductivity and does not cause a chemical change in the corresponding battery. Examples of the material of the anode current collector may include (e.g., may be) copper, stainless steel, aluminium, nickel, titanium, calcined carbon, copper and/or stainless steel that is surface treated with carbon, nickel, titanium, and/or silver, and an aluminium-cadmium alloy. Also, like the cathode current collector, the anode current collector may have fine irregularities on a surface thereof to enhance adhesive strength to the anode active material. The anode current collector may be in various suitable forms, such as a film, a sheet, a foil, a net, a porous structure, a foam structure, or a non-woven structure.

A separator may be interposed between the cathode and the anode prepared as described above.

The separator may generally have a pore diameter in a range of about 0.01 $\mu$m to about 10 $\mu$m and a thickness in a range of about 5 $\mu$m to about 30 $\mu$m. Examples of the separator may include (e.g., may be) an olefin-based polymer such as polypropylene and/or polyethylene; or a sheet or non-woven fabric of glass fibers. When a solid electrolyte such as a polymer is utilized as an electrolyte, the solid electrolyte may concurrently or simultaneously serve as the separator.

The non-aqueous electrolyte including a lithium salt is formed of a non-aqueous electrolyte solvent and a lithium salt. As the non-aqueous electrolyte, a non-aqueous electrolyte solution, an organic solid electrolyte, and/or an inorganic solid electrolyte may be utilized.

Examples of the non-aqueous electrolyte solvent may include, but are not limited to, any aprotic organic solvent such as N-methyl-2-pyrrolidinone, propylene carbonate, ethylene carbonate, butylene carbonate, dimethyl carbonate, diethyl carbonate, gamma-butyro lactone, 1,2-dimethoxy ethane, 2-methyl tetrahydrofuran, dimethylsulfoxide, 1,3-dioxolane, N,N-formamide, N,N-dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, and/or ethyl propionate.

Examples of the organic solid electrolyte may include, but are not limited to, polyethylene derivatives, polyethylene oxide derivatives, polypropylene oxide derivatives, phosphoric acid ester polymer, polyester sulfide, polyvinyl alcohol, and/or polyvinylidene fluoride.

Examples of the inorganic solid electrolyte may include, but are not limited to, $Li_3N$, $LiI$, $Li_5NI_2$, $Li_3N$-$LiI$-$LiOH$, $LiSiO_4$, $Li_2SiS_3$, $Li_4SiO_4$, $Li_4SiO_4$-$LiI$-$LiOH$, and/or $Li_3PO_4$-$Li_2S$-$SiS_2$.

The lithium salt may be a material easily dissolved in the non-aqueous electrolyte, and non-limiting examples thereof may include $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, $(FSO_2)_2NLi$, lithium chloroborate, lithium tetraphenylborate or a combination thereof.

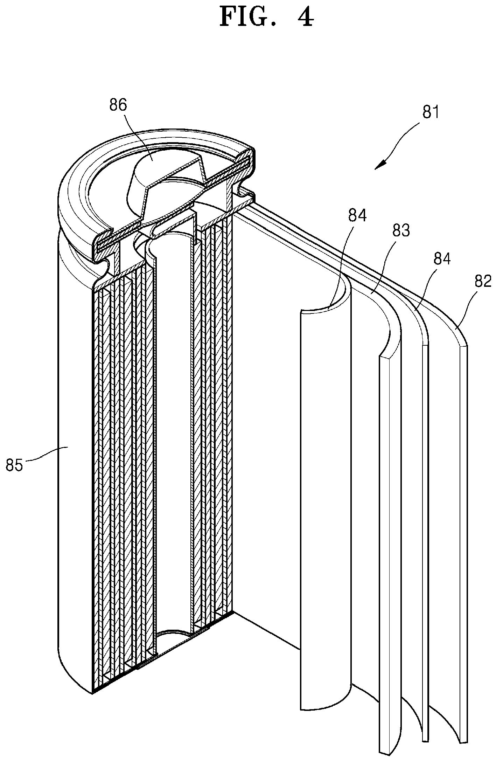

FIG. 4 is a cross-sectional view schematically illustrating a representative structure of a lithium secondary battery according to an embodiment.

Referring to FIG. 4, a lithium secondary battery 81 includes a cathode 83, an anode 82, and a separator 84. The cathode 83, the anode 82, and the separator 84 are wound or folded, and then accommodated in a battery case 85. The separator 84 may be interposed between the cathode 83 and the anode 82 to form a battery assembly in which the cathode 83, the anode 82, and the separator 84 are alternately stacked according to the shape of the battery 81. Subsequently, an organic electrolyte solution is injected into the battery case 85, and the battery case 85 is sealed with a cap assembly 86, thereby completing the manufacture of the lithium secondary battery 81. The battery case 85 may have a cylindrical, rectangular, or thin-film shape. For example, the lithium secondary battery 81 may be a large-sized thin-film battery. The lithium secondary battery 81 may be a lithium ion battery. Once the battery assembly is accommodated inside a pouch, impregnated in an organic electrolyte solution, and sealed, the manufacture of a lithium ion polymer battery may be completed. Also, a plurality of the battery assemblies may be stacked to form a battery pack, which may be utilized in any suitable device that requires high capacity and high output. For example, the battery pack may be utilized in laptop computers, smart phones, and/or electric vehicles.

Also, the lithium secondary battery may be utilized in electric vehicles (EVs) due to excellent storage stability at high temperatures, lifespan characteristics, and high-rate characteristics. For example, the lithium secondary battery may be utilized in hybrid vehicles such as plug-in hybrid electric vehicles (PHEVs).

One or more embodiments will now be described in more detail with reference to the following examples. However, these examples are not intended to limit the scope of the one or more embodiments.

**Preparation of nickel-based active material precursor for lithium secondary battery**

**Preparation Example 1**

A nickel-based active material precursor ($Ni_{0.6}Co_{0.2}Mn_{0.2}(OH)_2$) was synthesized utilizing a co-precipitation method.

Nickel sulfate ($NiSO_4 \cdot 6H_2O$), cobalt sulfate ($CoSO_4 \cdot 7H_2O$), and manganese sulfate ($MnSO_4 \cdot H_2O$) were dis-solved in distilled water (e.g., as a solvent), such that a molar ratio of Ni:Co:Mn=6:2:2 to prepare a mixed solution. Ammonia water ($NH_4OH$) was as a complexing agent and sodium hydroxide (NaOH) was as precipitating agents were prepared to form a complex compound. The metal source solution (i.e., the mixed solution), ammonia water, and sodium hydroxide were added to a reactor. Sodium hydroxide (e.g., additional sodium hydroxide) was then added to the reactor to adjust pH to about 11. Next, the contents in the reactor were stirred to be mixed for about 20 hours, and then the addition of the source solution ceased.

A slurry solution in the reactor was filtered, washed with distilled water of high purity, and dried in a hot air oven of 200 °C for 24 hours to prepare a nickel-based active material precursor ($Ni_{0.6}Co_{0.2}Mn_{0.2}(OH)_2$). The nickel-based active material precursor is in the form of a secondary particle, and an average particle diameter of the secondary particle is about 4 um.

**Comparative Preparation Example 1**

A nickel-based active material precursor ($Ni_{1/3}Co_{1/3}Mn_{1/3}(OH)_2$) was prepared in the same manner as in Preparation Example 1, except that nickel sulfate ($NiSO_4 \cdot H_2O$), cobalt sulfate ($CoSO_4 \cdot 7H_2O$), and manganese sulfate ($MnSO_4 \cdot H_2O$) were mixed such that a molar ratio of Ni:Co:Mn=1/3:1/3:1/3 was obtained.

**Comparative Preparation Example 2**

A nickel-based active material precursor ($Ni_{0.5}Co_{0.2}Mn_{0.3}(OH)_2$) was prepared in the same manner as in Preparation Example 1, except that nickel sulfate ($NiSO_4 \cdot 6H_2O$), cobalt sulfate ($CoSO_4 \cdot 7H_2O$), and manganese sulfate ($MnSO_4 \cdot H_2O$) were mixed such that a molar ratio of Ni:Co:Mn=5:2:3 was obtained.

**Preparation of nickel-based metal oxide for lithium secondary battery and nickel-based active material for lithium secondary battery**

**Example 1**

A composite metal hydroxide ($Ni_{0.6}Co_{0.2}Mn_{0.2}(OH)_2$), which is the nickel-based active material precursor prepared in Preparation Example 1, and lithium carbonate were mixed to obtain a first mixture. In the first mixture, a molar mixing ratio (Li/M) of lithium and a metal was about 0.2. Here, an amount of the metal is the total amount of Ni, Co, and Mn. The first mixture was first calcined in the air atmosphere at 1000 °C for 12 hours to obtain a nickel-based metal oxide for a lithium secondary battery.
Lithium carbonate was added to the nickel-based metal oxide for a lithium secondary battery to obtain a second mixture. A molar ratio of lithium and a metal in the second mixture was stoichiometrically adjusted to obtain the nickel-based active material ($LiNi_{0.6}CO_{0.2}Mn_{0.2}O_2$) and molar ratio of lithium and a metal in the second mixture was about 0.85. Here, an amount of the metal is the total amount of Ni, Co, and Mn. The second mixture was second calcined at about 900 °C in an oxygen atmosphere to obtain a nickel-based active material ($Li_{1.05}Ni_{0.6}Co_{0.2}Mn_{0.2}O_2$) for a lithium secondary battery.

**Examples 2 and 3**

Nickel-based metal oxides for a lithium secondary battery and nickel-based active materials ($Li_{1.05}Ni_{0.6}Co_{0.2}Mn_{0.2}O_2$) for a lithium secondary battery were prepared in the same manner as in Example 1, except that a first mixture was prepared by adding a composite metal hydroxide ($Ni_{0.6}Co_{0.2}Mn_{0.2}(OH)_2$) and lithium carbonate such that a molar ratio (Li/Me) in the first mixture and a molar ratio (Li/Me) of lithium and a metal in the second mixture were changed as shown in Table 2, respectively.

**Example 4**

A nickel-based metal oxide for a lithium secondary battery and a nickel-based active material ($Li_{1.05}Ni_{0.6}Co_{0.2}Mn_{0.2}O_2$) for a lithium secondary battery were prepared in the same manner as in Example 1, except that a first mixture was prepared by adding a composite metal hydroxide ($Ni_{0.6}Co_{0.2}Mn_{0.2}(OH)_2$) and lithium carbonate such that a molar ratio (Li/Me) in the first mixture was and a molar ratio (Li/Me) of lithium and a metal in the second mixture were changed as shown in Table 2.

**Example 5**

A nickel-based metal oxide for a lithium secondary battery and a nickel-based active material ($Li_{1.05}Ni_{0.75}Co_{0.1}Mn_{0.15}O_2$) for a lithium secondary battery were prepared in the same manner as in Example 1, except that a composite metal hydroxide ($Ni_{0.75}Co_{0.1}Mn_{0.15}(OH)_2$) was utilized instead of a composite metal hydroxide ($Ni_{0.6}Co_{0.2}Mn_{0.2}(OH)_2$) and lithium carbonate such that a molar ratio (Li/Me) in the first mixture was and a molar ratio (Li/Me) of lithium and a metal in the second mixture were changed as shown in Table 2. The composite metal hydroxide ($Ni_{0.75}Co_{0.1}Mn_{0.15}(OH)_2$) was prepared in the same manner as in Preparation Example 1, except that in Preparation Example 1, the molar ratio of nickel sulfate, cobalt sulfate, and manganese sulfate was stoichiometrically changed to obtain the target product.

**Example 6**

A nickel-based active material ($Li_{1.05}Ni_{0.6}Co_{0.2}Mn_{0.2}O_2$) for a lithium secondary battery was prepared in the same manner as in Example 1, except that a first mixture was obtained by adding a composite metal hydroxide ($Ni_{0.6}Co_{0.2}Mn_{0.2}(OH)_2$) and lithium carbonate such that a molar ratio (Li/Me) of lithium and a transition metal in the first mixture and a molar ratio (Li/Me) of lithium and a metal in the second mixture were changed as shown in Table 2.

**Comparative Example 1**

The nickel-based active material precursor ($Ni_{0.6}Co_{0.2}Mn_{0.2}(OH)_2$) for a lithium secondary battery prepared in Preparation Example 1 was obtained. The nickel-based active material precursor ($Ni_{0.6}Co_{0.2}Mn_{0.2}(OH)_2$) for a lithium secondary battery is in the form of a secondary particle, and an average particle diameter of the secondary particle is about 4 $\mu$m.

A composite metal hydroxide ($Ni_{0.6}Co_{0.2}Mn_{0.2}(OH)_2$), which is the nickel-based active material precursor, and lithium carbonate were added to prepare a first mixture. A mixing molar ratio (Li/Me) of lithium and a metal in the first mixture was about 1.05. Here, an amount of the metal is the total amount of Ni, Co, and Mn. The first mixture was calcined in the air atmosphere at 1000 °C for 12 hours to obtain a nickel-based active material ($Li_{1.05}Ni_{0.6}Co_{0.2}Mn_{0.2}O_2$).

**Comparative Example 2**

A nickel-based active material ($Li_{1.05}Ni_{0.6}Co_{0.2}Mn_{0.2}O_2$) was prepared in the same manner as in Example 1, except that a first mixture was obtained by adding a composite metal hydroxide ($Ni_{0.6}Co_{0.2}Mn_{0.2}(OH)_2$) and lithium carbonate such that a mixing molar ratio (Li/Me) of lithium and a metal in the first mixture was about 0.18.

The nickel-based active material prepared according to Comparative Example 2 did not have lithium arrangement as in the structure of single crystals occurring in the nickel-based metal oxide obtained after the first heat-treatment, and thus single crystals having excellent characteristics were not obtained.

**Comparative Example 3-1**

A nickel-based metal oxide for a lithium battery and a nickel-based active material ($Li_{1.05}Ni_{0.6}Co_{0.2}Mn_{0.2}O_2$) were prepared in the same manner as in Example 1, except that a first mixture was obtained by adding a composite metal hydroxide ($Ni_{0.6}Co_{0.2}Mn_{0.2}(OH)_2$) and lithium carbonate such that a mixing molar ratio (Li/Me) of lithium and a metal in the first mixture was about 0.6.

**Comparative Example 3-2**

A nickel-based metal oxide for a lithium battery and a nickel-based active material ($Li_{1.05}Ni_{0.6}Co_{0.2}Mn_{0.2}O_2$) were prepared in the same manner as in Example 1, except that a first mixture was obtained by adding a composite metal hydroxide ($Ni_{0.6}Co_{0.2}Mn_{0.2}(OH)_2$) and lithium carbonate such that a mixing molar ratio (Li/Me) of lithium and a metal in the first mixture was about 0.7.

**Comparative Example 3-3**

A nickel-based metal oxide for a lithium battery and a nickel-based active material ($Li_{1.05}Ni_{0.6}Co_{0.2}Mn_{0.2}O_2$) were prepared in the same manner as in Example 1, except that a first mixture was obtained by adding a composite metal hydroxide ($Ni_{0.6}Co_{0.2}Mn_{0.2}(OH)_2$) and lithium carbonate such that a mixing molar ratio (Li/M) of lithium and a metal in the first mixture was about 0.5.

**Comparative Example 4**

A nickel-based active material ($LiNi_{1/3}Co_{1/3}Mn_{1/3}O_2$) for a lithium secondary battery was prepared, except that the nickel-based active material precursor ($Ni_{1/3}Co_{1/3}Mn_{1/3}(OH)_2$) of Comparative Preparation Example 1 was utilized instead of the nickel-based active material precursor ($Ni_{0.6}Co_{0.2}Mn_{0.2}(OH)_2$) of Preparation Example 1, and a molar ratio (Li/Me) of lithium and a metal in the second mixture were changed as shown in Table 2

The nickel-based active material precursor ($Ni_{1/3}CO_{1/3}Mn_{1/3}(OH)_2$) was prepared according to the paper (J. Mater. Chem, A. 2018, 6, 123422-121352, the entire content of which is incorporated herein as reference).

The nickel-based metal oxide for a lithium secondary battery has a spinel/layered structure.

**Comparative Example 5**

A nickel-based active material ($LiNi_{0.5}CO_{0.2}Mn_{0.3}O_2$) for a lithium secondary battery was prepared in the same manner as in Example 1, except that the nickel-based active material precursor ($Ni_{0.5}Co_{0.2}Mn_{0.3}(OH)_2$) of Comparative Preparation Example 2 was utilized instead of the nickel-based active material precursor ($Ni_{0.6}Co_{0.2}Mn_{0.2}(OH)_2$) of Preparation Example 1, and a molar ratio (Li/Me) of lithium and a metal in the second mixture were changed as shown in Table 2.

In Examples 1 to 6 and Comparative Examples 1 to 5, the total molar ratios of Li/Me and the molar ratios of Li/Me in the first mixture and the second mixture are as shown in Table 2.

Table 2

| Sample | Molar ratio of Li/Me in first mixture | Molar ratio of Li/Me in second mixture | Total Li/Me |
|---|---|---|---|
| Example 1 | 0.2 | 0.85 | 1.05 |
| Example 2 | 0.25 | 0.8 | 1.05 |
| Example 3 | 0.3 | 0.75 | 1.05 |
| Example 4 | 0.4 | 0.65 | 1.05 |
| Example 5 | 0.2 | 0.85 | 1.05 |
| Example 6 | 0.35 | 0.7 | 1.05 |
| Comparative Example 1 | - | 1.05 | 1.05 |
| Comparative Example 2 | 0.18 | 0.87 | 1.05 |
| Comparative Example 3-1 | 0.6 | 0.45 | 1.05 |
| Comparative Example 3-2 | 0.7 | 0.35 | 1.05 |
| Comparative Example 3-3 | 0.5 | 0.55 | 1.05 |
| Comparative Example 4 | 0.2 | 0.85 | 1.05 |
| Comparative Example 5 | 0.2 | 0.85 | 1.05 |

**Manufacture Example 1: Preparation of coin cell**

A coin cell was manufactured utilizing the nickel-based active material ($Li_{1.05}Ni_{0.6}Co_{0.2}Mn_{0.2}O_2$) prepared in Example 1 as a cathode active material, as follows:

A mixture of 96 g of the nickel-based active material ($Li_{1.05}Ni_{0.6}Co_{0.2}Mn_{0.2}O_2$) prepared in Example 1, 2 g of polyvinylidene fluoride, 47 g of N-methylpyrrolidone as a solvent, and 2 g of carbon black as a conducting agent was deaerated and uniformly dispersed utilizing a mixer to prepare a slurry for forming a cathode active material layer.

The slurry prepared according to the above-described process was coated on an aluminium foil utilizing a doctor blade so as to form a thin electrode plate, and the thin electrode plate was dried at 135 °C for 3 hours or more and subjected to rolling and vacuum drying processes, thereby preparing a cathode.

A 2032 type coin cell was manufactured utilizing the cathode and a lithium metal counter electrode. A separator having a thickness of about 16 $\mu$m and formed of a porous polyethylene (PE) film was interposed between the cathode and the lithium metal counter electrode, and an electrolyte solution was injected to manufacture the 2032 type coin cell. A solution in which 1.1 M $LiPF_6$ was dissolved in a solvent prepared by mixing ethylene carbonate (EC) and ethylmethyl carbonate (EMC) at a volume ratio of 3:5 was utilized as the electrolyte solution.

**Manufacture Examples 2 to 6: Manufacture of coin cell**

Coin cells were each manufactured in the same manner as in Manufacture Example 1, except that the nickel-based active materials prepared in Examples 2 to 6 were utilized respectively instead of the nickel-based active material of Example 1.

**Comparative Manufacture Example 1, Comparative Manufacture Example 2, Comparative Manufacture Example 3-1, Comparative Manufacture Example 3-2, Comparative Manufacture Example 3-3, Comparative Manufacture Example 4, and Comparative Manufacture Example 5: Manufacture of coin cell**

Lithium secondary batteries were each manufactured in the same manner as in Manufacture Example 1, except that the nickel-based active materials prepared in Comparative Examples 1, 2, 3-1, 3-2, 3-3, 4, and 5 were utilized respectively instead of the nickel-based active material of Example 1.

**Evaluation Example 1: Scanning electron microscope (SEM)**

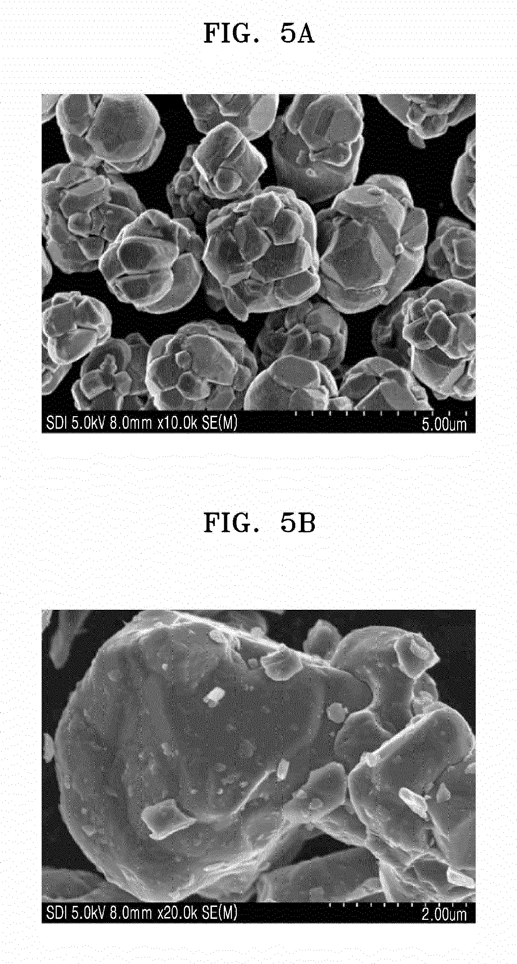

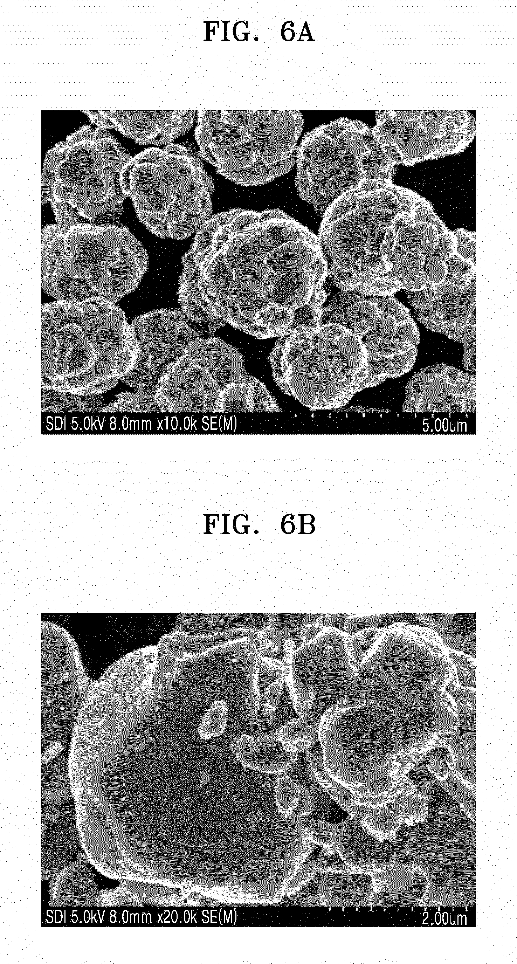

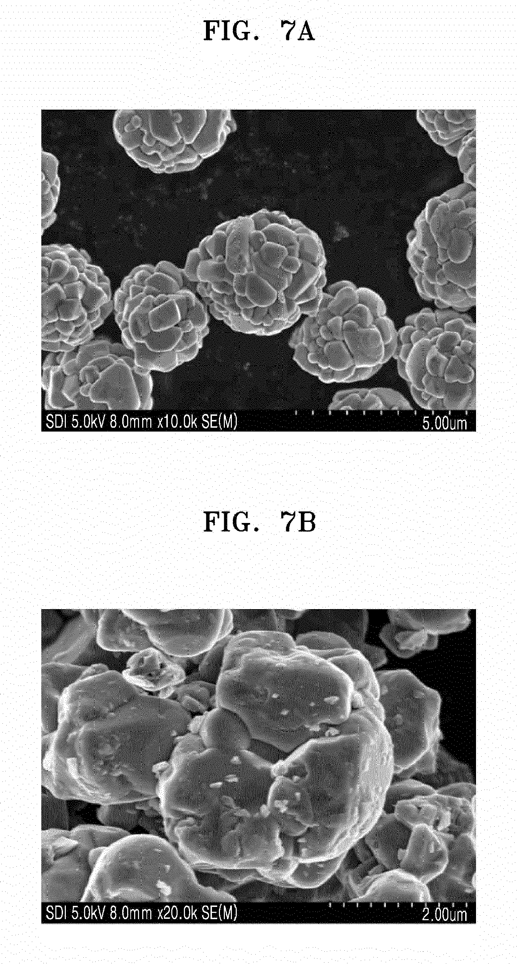

A scanning electron microscope (SEM) analysis was performed on each of the nickel-based metal oxides and the nickel-based active materials formed therefrom prepared according to Examples 2 to 4 and the nickel-based metal oxides and the nickel-based active materials formed therefrom prepared according to Comparative Examples 3-1, 3-2, and 3-3. In the analysis, a Magellan 400L (available from FEI company) was utilized as the scanning electron microscope, and the results are shown in FIGS. 5A, 5B, 6A, 6B, 7A, 7B, 8A, 8B, 9A, 9B, 10A, and 10B. FIGS. 5A, 6A, and 7A show SEM images of the nickel-based metal oxides of Examples 2 to 4, respectively, and FIGS. 5B, 6B, and 7B show SEM images of the nickel-based lithium active materials formed from the nickel-based metal oxides of FIGS. 5A, 6A, and 7A, respectively.

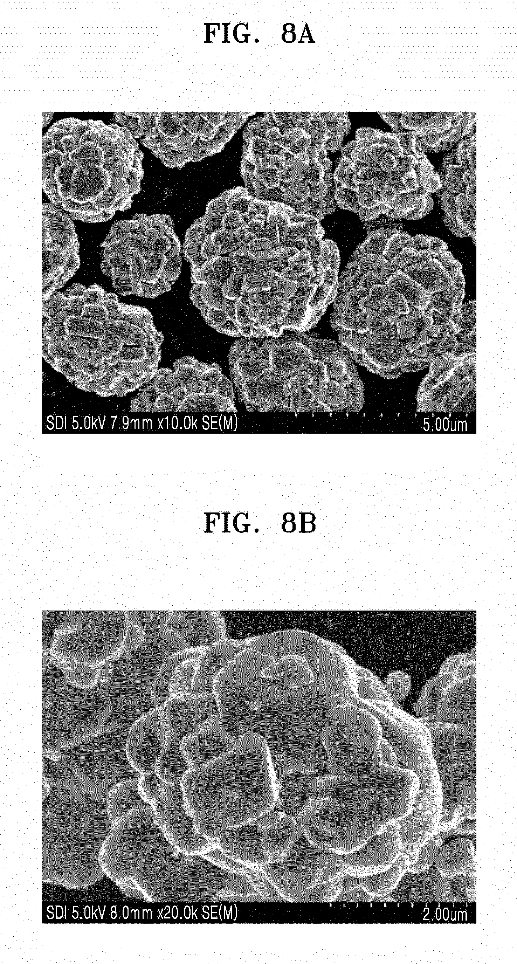

FIG. 8A is an SEM image of the nickel-based metal oxide of Comparative Example 3-3, and FIG. 8B is an SEM image of the nickel-based active material of Comparative Example 3-3.

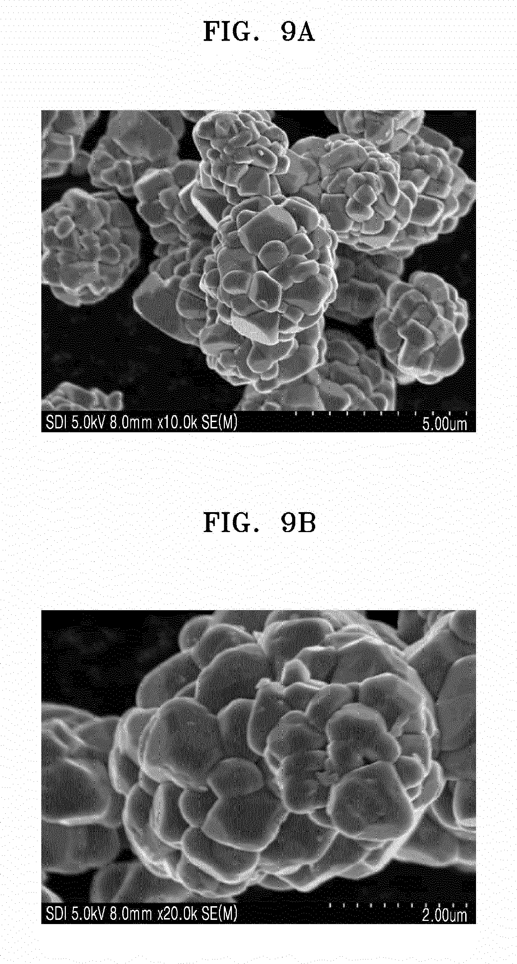

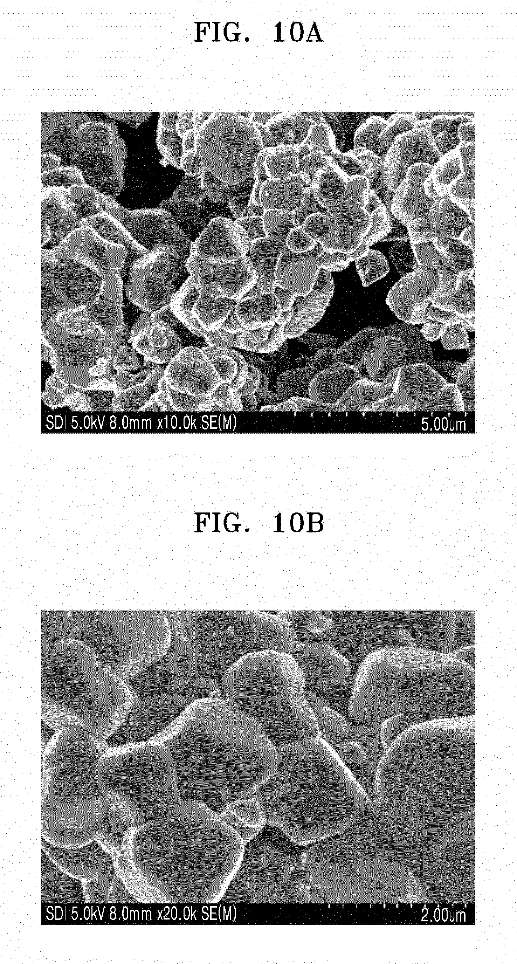

FIGS. 9A and 10A show SEM images of the nickel-based metal oxides of Comparative Examples 3-1 and 3-2, respectively, and FIGS. 9B and 10B show SEM images of the nickel-based active materials of Comparative Examples 3-1 and 3-2, respectively.

Referring to the SEM images, it may be seen (e.g., known) that the nickel-based active materials of Examples 2 and 3 having the molar ratio Li/Me of 0.25 and 0.3 respectively were each single-crystal particles. Also, it may be seen (e.g., known) that when the molar ratio Li/Me is 0.25, 0.3, and 0.4, the nickel-based active materials of Examples 2 to 4 were each single-crystal particles. On the contrary, the nickel-based active materials of Comparative Examples 3-1 to 3-3 having the molar ratio of 0.5, 0.6, and 0.7 respectively were not in the form of single-crystal particles.

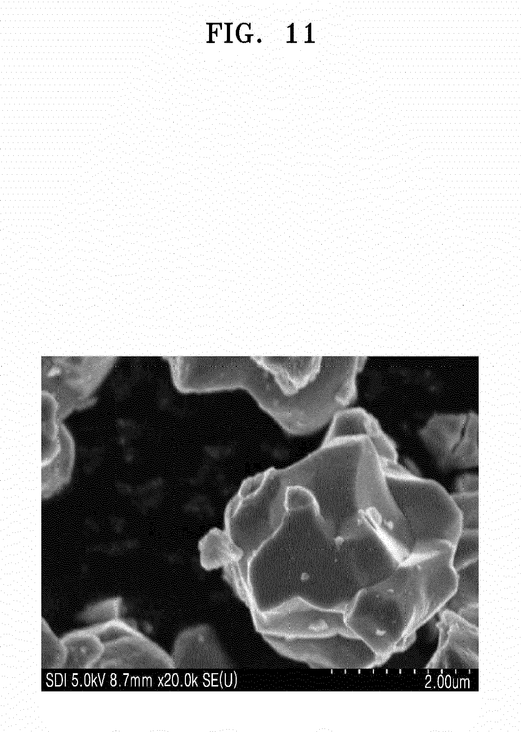

Also, an SEM analysis was performed on the nickel-based active material of Example 5. The results of the SEM analysis are shown in FIG. 11.

Referring to FIG. 11, it may be seen (e.g., known) that the nickel-based active material of Example 5 was in the form of a single-crystal particle, wherein an average size of primary particles was in a range of about 0.1 $\mu$m to about 3 $\mu$m.

**Evaluation Example 2: X-ray diffraction (XRD) analysis of nickel-based metal oxide**

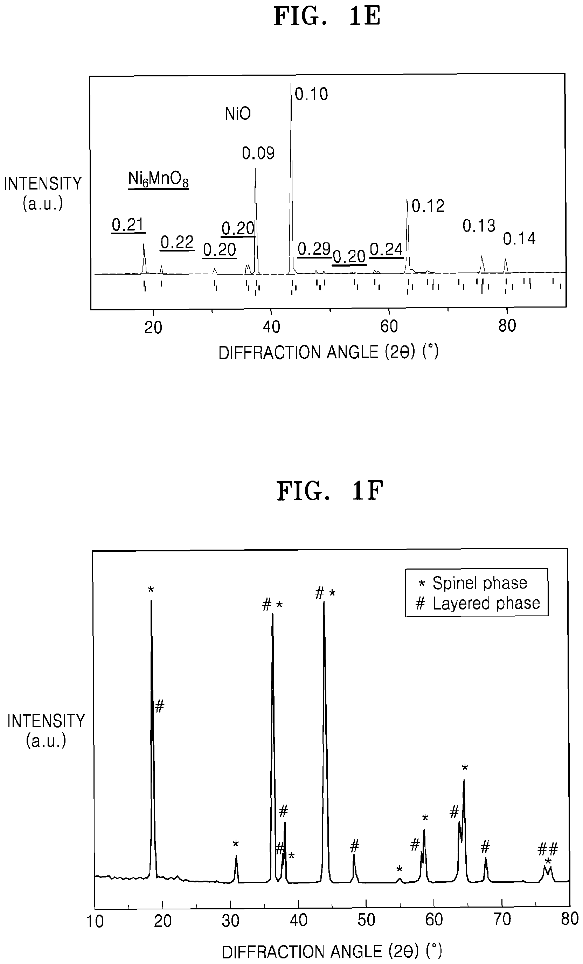

An X-ray diffraction (XRD) analysis was performed on each of the nickel-based active materials prepared in Examples 1 to 3 and Comparative Example 4 utilizing an X'pert pro (available from PANalytical) with Cu K$\alpha$ radiation (1.54056 Å). The XRD analysis results are shown in FIGS. 1E and 1F and Tables 3-4. FIG. 1E shows the XRD analysis results of the nickel-based metal oxide for a lithium secondary battery of Example 1, and FIG. 1F shows the XRD analysis results of the nickel-based metal oxide for a lithium secondary battery of Comparative Example 4.

FWHM (003) represents a full width at half maximum of a peak (the peak at which 2$\theta$ is about 18°) corresponding to the (003) face, and a FWHM (104) represents a full width at half maximum of a peak (the peak at which 2$\theta$ is about 43°) corresponding to the (104) face. Also, in Table 4, Area (003/104) represents a ratio of an area of the peak (the peak at which 2$\theta$ is about 18°) corresponding to the (003) face to an area of the peak (the peak at which 2$\theta$ is about 43°) corresponding to the (104) face.

Both the ordered rock salt cubic phase and the rock salt cubic phase had the peak at 43°, and only the ordered rock salt cubic phase had the peak at 18°.

Table 3

| Sample | FWHM of main peak (2$\theta$=18°) | FWHM of minor peak (2$\theta$=43°) |
|---|---|---|
| Example 1 | 0.1300 | 0.0930 |
| Example 2 | 0.2068 | 0.0996 |
| Example 3 | 0.3511 | 0.1442 |

Referring to FIG. 1E and Table 3, the nickel-based metal oxide for a lithium secondary battery of Example 1 had a main peak at which the diffraction angle $2\theta$ is 43° as shown in FIG. 1E and a minor peak at which the diffraction angle $2\theta$ is 18°.

On the contrary, unlike the nickel-based metal oxide of Example 1, the nickel-based metal oxide for a lithium secondary battery of Comparative Example 4 did not have peaks related to a rock salt cubic phase crystalline structure and an ordered rock salt cubic phase crystalline structure as shown in FIG. 1F. In this regard, the effect of an amount of nickel on a crystalline structure may be confirmed.

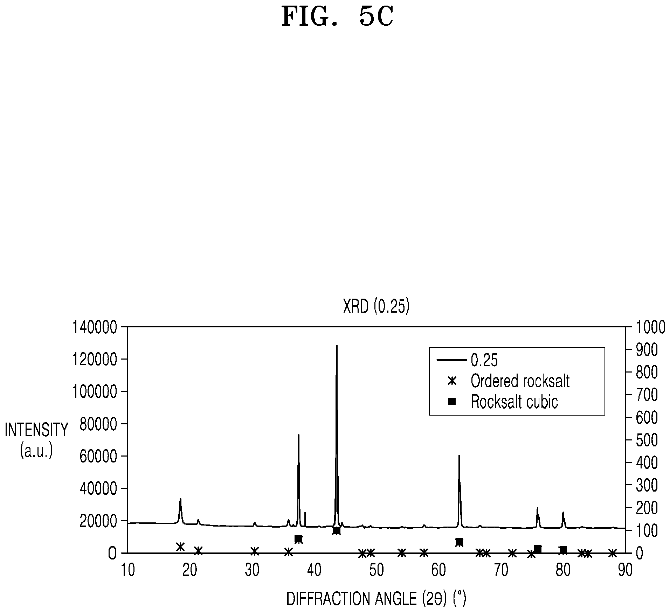

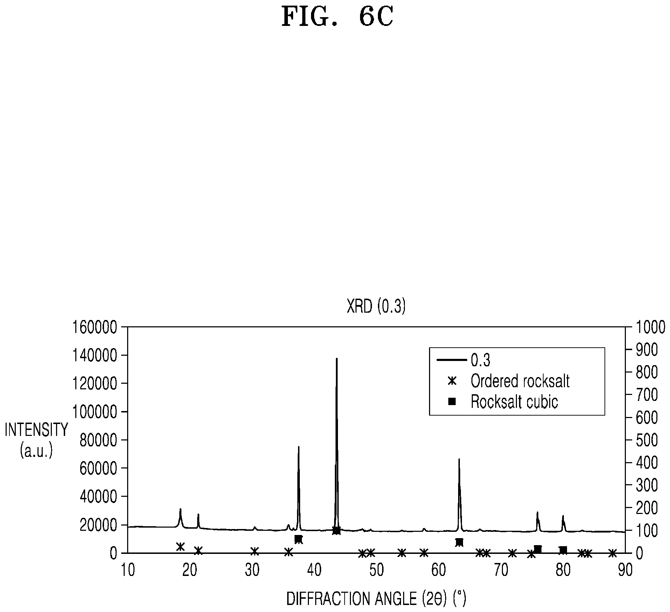

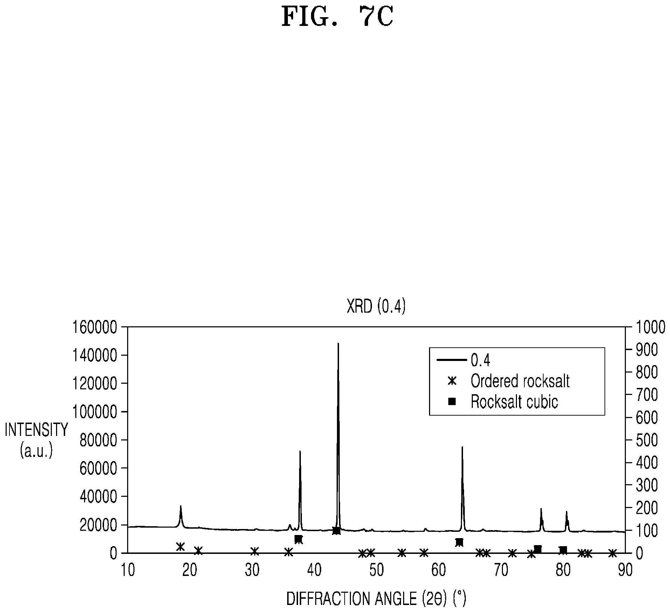

Also, FIGS. 5C, 6C, 7C, 9C, 10C, and 10D show the results of XRD analysis of the nickel-based metal oxides prepared in Examples 2 to 4 and Comparative Examples 3-1 to 3-3.

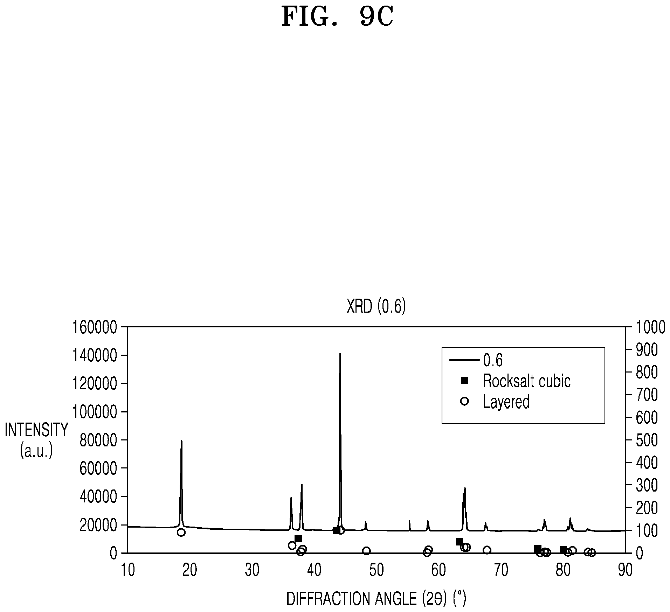

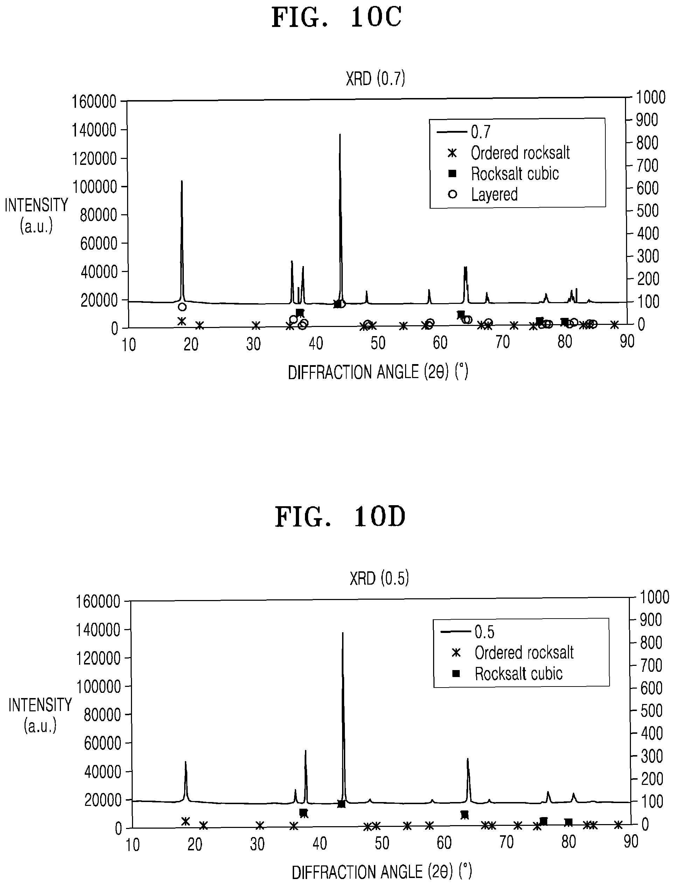

FIGS. 5C, 6C, and 7C shows the XRD analysis results of the nickel-based metal oxides as first calcined products of Examples 2 to 4, respectively, and FIGS. 9C, 10C, and 10D shows the XRD analysis results of the nickel-based metal oxides as first calcined products of Comparative Examples 3-1, 3-2, and 3-3, respectively. In FIGS. 5C, 6C, and 7C, * is marked on the peaks related to an ordered rock salt cubic phase, and ■ is marked on the peaks related to a rock salt cubic phase.

Referring to these figures, when the Li/Me molar ratio was 0.5 (e.g., Comparative Example 3-3), peaks with a small intensity in a range of about 20° to about 30° were hardly observed, and when the Li/Me molar ratio was about 0.6 or about 0.7 (e.g., Comparative Examples 3-1 and 3-2), none of the peaks was observed. Based on the above, it was confirmed (e.g., known) that the ordered rock salt crystalline phase disappeared.

## Evaluation Example 3: XRD analysis on nickel-based active material

An X-ray diffraction (XRD) analysis was performed on each of the nickel-based active materials prepared in Examples 1 to 3 and the nickel-based active material prepared in Comparative Example 1 utilizing an X'pert pro (available from PANalytical) with Cu K$\alpha$ radiation (1.54056 Å). The following characteristics were evaluated utilizing the XRD analysis results and are shown in Table 4.

A FWHM (003) represents a full width at half maximum of a peak (the peak at which $2\theta$ is about 18°) corresponding to the (003) face, and a FWHM (003/104) represents a ratio of a full width at half maximum of a peak (the peak at which $2\theta$ is about 18°) corresponding to the (003) face to a full width at half maximum of a peak (the peak at which $2\theta$ is about 43°) corresponding to the (104) face. Also, in Table 4, Area (003/104) represents a ratio of an area of the peak (the peak at which $2\theta$ is about 18°) corresponding to the (003) face to an area of the peak (the peak at which $2\theta$ is about 43°) corresponding to the (104) face.

Table 4

| Sample | FWHM (003)( °) | Area (003/104) | FWHM (003/104) |
|---|---|---|---|
| Example 1 | 0.1310 | 1.1899 | 0.6211 |
| Example 2 | 0.1237 | 1.2039 | 0.8236 |
| Example 3 | 0.1237 | 1.1678 | 0.8280 |
| Comparative Example 1 | 0.1060 | 1.3072 | 0.8366 |

Referring to Table 4, it may be seen (e.g., known) that the nickel-based active materials of Examples 1 to 3 each had increased FWHM (003) and decreased FWHM (003/104) and Area (003/104) as compared with that of the nickel-based active material of Comparative Example 1.

## Evaluation Example 4: Residual lithium

Residual lithium of the nickel-based active materials of Example 2 and Comparative Example 1 was evaluated according to the following method.

5 g of the cathode active material was placed in a beaker including 100 ml of distilled water and stirred at a speed of 200 rpm for 5 minutes to dissolve lithium remaining on the surface. Then, the cathode active material was removed from the lithium-dissolved solution utilizing a filter having an average pore size of 0.5 $\mu$m to 5 $\mu$m.

An amount of lithium in the solution was measured by titrating the lithium derivative remaining on the surface from which the cathode active material was removed, with a 1 N HCl solution.

The amount of lithium in the solution was measured by an automatic titrator. A first inflection point (EP1) at which the pH rapidly changed from 7 to 9 and an end point (FP) at which the pH reached 5 were measured, and an amount of $Li_2CO_3$ and an amount of LiOH were calculated according to the following equations:

## Equation 1

Amount of $Li_2CO_3$ (%)= (FP-EP1) X 0.1 X 0.001 X (Mw(73.89) of $Li_2CO_3$/5) X 100

## Equation 2

Amount of LiOH (%)= (2 X EP1-FP) X 0.1 X 0.001 X (Mw(23.94) of LiOH/5) X 100

The calculated amounts of $Li_2CO_3$ and LiOH were summed to measure an amount of the lithium derivative remaining on the final surface. The amount of the lithium derivative was converted into wt%, and the results are shown in Table 5.

Table 5

| Sample | $Li_2CO_3$ (wt%) | LiOH (wt%) | Free Li (ppm) |
|---|---|---|---|
| Example 2 | 0.196 | 0.183 | 898 |
| Comparative Example 1 | 0.381 | 0.351 | 1734 |

As shown in Table 5, an amount of residual lithium of the nickel-based active material of Example 2 was reduced as compared with the nickel-based active material of Comparative Example 1.

### Evaluation Example 4: Charge/discharge efficiency

Charge/discharge characteristics of the coin cells manufactured in Manufacture Examples 1 to 4 and Comparative Manufacture Examples 1, 3-1, 3-2, and 3-3 were evaluated utilizing a charging/discharging apparatus (Model No.: TOYO-3100 available from TOYO).

In the first charge/discharge cycle, the coin cells were each charged at a constant current of 0.1 C until the voltage reached 4.2 V and then charged at a constant voltage until the current reached 0.05 C. Once the charging was completed, the cell was rested for about 10 minutes, and then discharged at a constant current of 0.1 C until the voltage reached 3 V. In the second charge/discharge cycle, the cells were each charged at a constant current of 0.2 C until the voltage reached 4.2 V and then charged at a constant voltage until the current reached 0.05 C. Once the charging was completed, the cell was rested for about 10 minutes, and then discharged at a constant current of 0.2 C until the voltage reached 3 V.

Evaluation of the lifespan of each of the coin cells was performed by charging the cell at a constant current of 1 C until the voltage reached 4.2 V and then charging the cell at a constant voltage until the current reached 0.05 C. Once the charging was completed, the cell was rested for about 10 minutes, and then discharged at a constant current of 1 C until the voltage reached 3 V. The charge/discharge cycle was repeated 50 times.

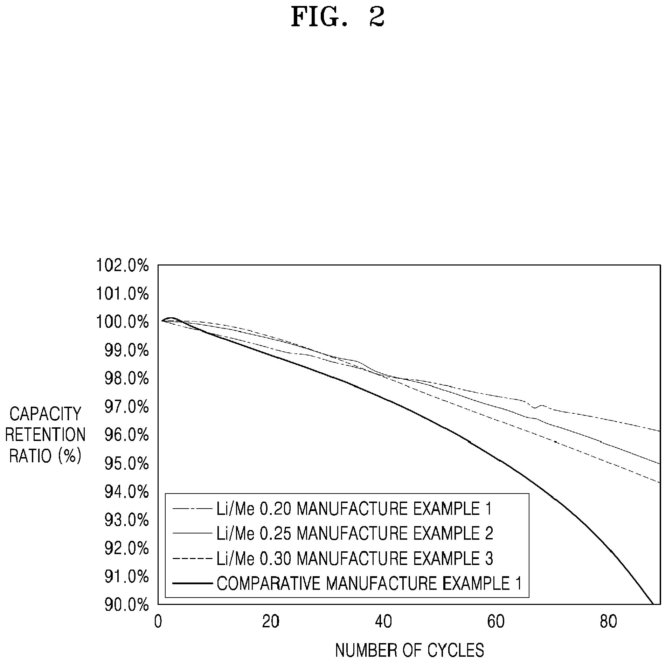

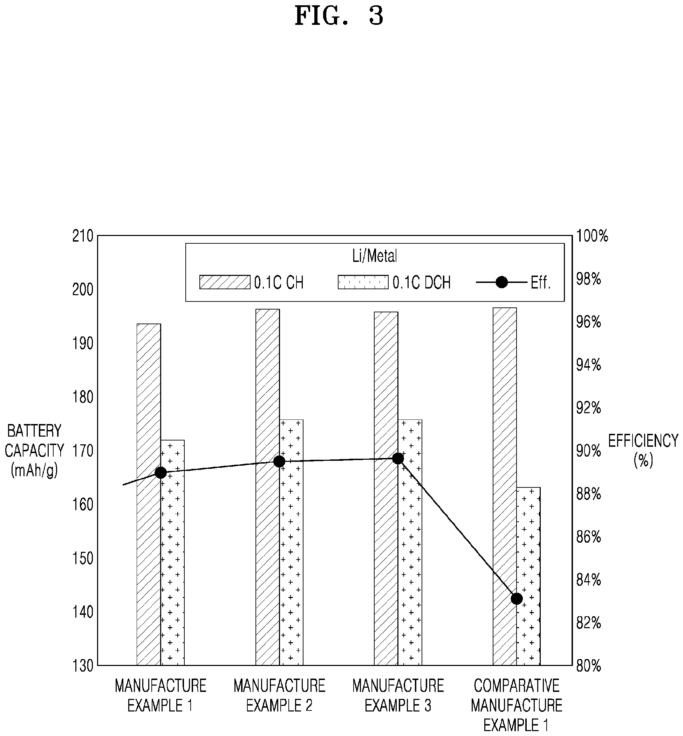

A capacity retention ratio (CRR) was calculated utilizing Equation 3, a charge/discharge efficiency was calculated utilizing Equation 4, and capacity retention ratios, charge/discharge efficiency characteristics, and battery capacities were evaluated and some of the results are shown in Table 6 and FIGS. 2 and 3.

## Equation 3

Capacity retention ratio [%] = [discharge capacity of 50th cycle/discharge capacity of 1st cycle] X 100

## Equation 4

$$\text{Charge/discharge efficiency} = [\text{discharge capacity of 1}^{\text{st}}\text{ cycle/ charge capacity of 1}^{\text{st}}\text{ cycle}] \times 100$$

Table 6

| Sample | Mixing molar ratio (Li/M) of lithium and metal in first mixture | Charge capacity (mAh/g) | Discharge capacity (mAh/g) | Charge/discharge efficiency (%) |
|---|---|---|---|---|
| Manufacture Example 1 | 0.2 | 193.7 | 172.4 | 89.0 |
| Manufacture Example 2 | 0.25 | 196.5 | 175.9 | 89.5 |
| Manufacture Example 3 | 0.3 | 196.1 | 175.9 | 89.7 |
| Manufacture Example 4 | 0.4 | 195.4 | 172.3 | 88.2 |
| Comparative Manufacture Example 1 | - | 196.6 | 163.5 | 83.2 |
| Comparative Manufacture Example 3-3 (Comparative Example 3-3) | 0.5 | 197.3 | 171.6 | 87.0 |
| Comparative Manufacture Example 3-1 (Comparative Example 3-1) | 0.6 | 194.9 | 170.5 | 87.5 |
| Comparative Manufacture Example 3-2 (Comparative Example 3-2) | 0.7 | 196.4 | 172.5 | 87.8 |

Referring to Table 6, it may be seen (e.g., known) that the coin cells prepared in each of Manufacture Examples 1 to 4 had improved charge/discharge efficiency and discharge capacity characteristics as compared with those of the coin cells prepared in Comparative Manufacture Examples 1, 3-1, 3-2, and 3-3. Also, it may be seen (e.g., known) that the coin cells of each of Manufacture Examples 1 to 3 had improved capacity retention ratios as compared with those of the coin cell of Comparative Manufacture Example 1 as shown in FIG. 2.

Referring to FIG. 3, it may be seen (e.g., known) that the coin cells of each of Manufacture Examples 1 to 3 had improved charge/discharge efficiency and battery capacities as compared with those of the coin cell of Comparative Manufacture Example 1 as shown in FIG. 3.

**Evaluation Example 5: Room temperature charge/discharge characteristics**

Charge/discharge characteristics of the coin cells manufactured in Manufacture Example 5 and Comparative Manufacture Example 5 were evaluated utilizing a charging/discharging apparatus (Model No.: TOYO-3100 available from TOYO).

In the first charge/discharge cycle, the coin cells were each charged at 25 °C at a constant current of 0.1 C until the voltage reached 4.2 V and then charged at a constant voltage until the current reached 0.05 C. Once the charging was completed, the cell was rested for about 10 minutes, and then discharged at a constant current of 0.1 C until the voltage reached 3 V. In the second charge/discharge cycle, the cells were each charged at a constant current of 0.2 C until the voltage reached 4.2 V and then charged at a constant voltage until the current reached 0.05 C. Once the charging was completed, the cell was rested for about 10 minutes, and then discharged at a constant current of 0.2 C until the voltage reached 3 V.

Evaluation of the lifespan of each of the coin cells was performed by charging the cell at a constant current of 1 C until the voltage reached 4.2 V and then charging the cell at a constant voltage until the current reached 0.05 C. Once the charging was completed, the cell was rested for about 10 minutes, and then discharged at a constant current of 1 C until the voltage reached 3 V. The charge/discharge cycle was repeated 40 times.

A capacity retention ratio (CRR) was calculated utilizing Equation 3, a charge/discharge efficiency was calculated utilizing Equation 4, and nominal capacity (0.1 C capacity), nominal energy, and real energy density were evaluated and some of the results are shown in Table 7.

Table 7

| Sample | | 0.1 C capacity (mAh/g) | Nominal voltage (V) | Nominal energy (mWh/g) | Real energy density (mWh/g) |
|---|---|---|---|---|---|
| Comparative Manufacture Example 5 | 4.2 V | 147.4 | 3.778 | 557 | 561 |
| | 4.3 V | 155.1 | 3.795 | 588 | 595 |
| | 4.4 V | 172.1 | 3.808 | 655 | 666 |
| Manufacture Example 5 | 4.2 V | 173.7 | 3.784 | 657 | 665 |
| | 4.3 V | 195.7 | 3.826 | 749 | 758 |
| | 4.4 V | 205.2 | 3.838 | 787 | 798 |

In Table 7, 4.2V and 4.3V represent the maximum voltage range in the above-described charge/discharge cycle. The term 4.3V refers to a case in which 4.3V is implemented instead of 4.2V in the above-described charge/discharge cycle.

Referring to Table 7, the lithium secondary battery of Manufacture Example 5 had Improved Nominal energy and Real energy density,

Also, the lithium secondary battery of Manufacture Example 5 utilizes a nickel-based active material having an amount of nickel of 75 mol% as a cathode active material, and a discharge capacity of the lithium secondary battery of Manufacture Example 5 is better than that of the lithium secondary battery of Comparative Manufacture Example 5 at the same voltage. A voltage of the lithium secondary battery of Comparative Manufacture Example 5 has to be increased to 4.4 V to achieve the same high (excellent) discharge capacity characteristics as that of the lithium secondary battery of Manufacture Example 5 achieved at 4.2 V.

**Evaluation Example 6: Capacity retention ratio**

Charge/discharge characteristics of the coin cells manufactured in each of Manufacture Examples 2, 3, 4, and 6 and Comparative Manufacture Example 5 were evaluated utilizing a charging/discharging apparatus (Model No.: TOYO-3100 available from TOYO).

In the first charge/discharge cycle, the coin cells were each charged at a constant current of 0.1 C until the voltage reached 4.2 V and then charged at a constant voltage until the current reached 0.05 C. Once the charging was completed, the cell was rested for about 10 minutes, and then discharged at a constant current of 0.1 C until the voltage reached 3 V. In the second charge/discharge cycle, the cells were each charged at a constant current of 0.2 C until the voltage reached 4.2 V and then charged at a constant voltage until the current reached 0.05 C. Once the charging was completed, the cell was rested for about 10 minutes, and then discharged at a constant current of 0.2 C until the voltage reached 3 V.

Evaluation of the lifespan of each of the coin cells was performed by charging the cell at a constant current of 1 C until the voltage reached 4.2 V and then charging the cell at a constant voltage until the current reached 0.05 C. Once the charging was completed, the cell was rested for about 10 minutes, and then discharged at a constant current of 1 C until the voltage reached 3 V. The charge/discharge cycle was repeated 50 times.

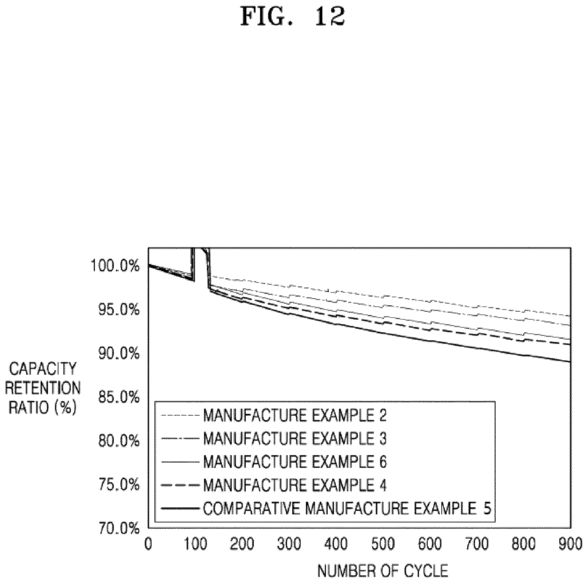

The results of evaluation of capacity retention ratio are shown in FIG. 12.

Referring to FIG. 12, it may be seen (e.g., known) that the coin cells prepared in Manufacture Examples 2 to 4 and 6 had improved capacity retention ratio characteristics than those of the coin cell of Comparative Manufacture Example 5.

As described above, when a nickel-based metal oxide for a lithium secondary battery according to one or more embodiments is utilized, a single-crystal nickel-based active material for a lithium secondary battery capable of suppressing aggregation of particles, improving productivity, and having a small amount of residual lithium without being washed may be manufactured. A lithium secondary battery prepared utilizing the nickel-based active material for a lithium secondary battery may have improved charge/discharge efficiency.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims, and equivalents thereof.

**Claims**

1. A nickel-based metal oxide for a lithium secondary battery, the nickel-based metal oxide comprising a cubic composite phase,

   wherein the cubic composite phase comprises a metal oxide phase represented by Formula 1 and a metal oxide phase represented by Formula 2:

   Formula 1           $Ni_{1-x-z-k}M_kLi_xCo_zO_{1-y}$,

   wherein, in Formula 1, M is at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), $0 \leq x \leq 0.1$, $0 \leq y \leq 0.1$, $0 \leq z \leq 0.5$, and $0 \leq k \leq 0.5$

   Formula 2           $Ni_{6-x-z-k}M_kLi_xCo_zMnO_{8-y}$, and

   wherein, in Formula 2, M is at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), $0 \leq x \leq 0.1$, $0 \leq y \leq 0.1$, $0 \leq z \leq 0.5$, and $0 \leq k \leq 0.5$, and the case where x of Formula 1 and x of Formula 2 are 0 at the same time is excluded.

2. The nickel-based metal oxide of claim 1, wherein the metal oxide phase represented by Formula 1 is a rock salt cubic phase, and the metal oxide phase represented by Formula 2 is an ordered rock salt cubic phase.

3. The nickel-based metal oxide of claim 1 or claim 2, wherein z in Formulae 1 and 2 is 0.

4. The nickel-based metal oxide of any one of claims 1 to 3, wherein the nickel-based metal oxide is a single crystal particle, and the single-crystal particle is a single crystal having a size in a range of about 1 μm to about 5 μm, an agglomerate of primary particles, or a combination thereof, and wherein a size of the primary particles is in a range of about 1 μm to about 5 μm, optionally wherein:
   a size of the agglomerate is in a range of about 1 μm to about 9 μm.

5. The nickel-based metal oxide of any one of claims 1 to 4, wherein X-ray diffraction analysis of the nickel-based metal oxide has a main peak at a diffraction angle 2θ in a range of about 42° to about 44° and a minor peak at a diffraction angle 2θ in a range of about 18° to about 20°.

6. The nickel-based metal oxide of claim 5, wherein:

   (i) a full width at half maximum (FWHM) of the main peak is in a range of about 0.13° to about 0.36°, and a FWHM of the minor peak is in a range of about 0.09° to about 0.15°; and/or
   (ii) a ratio ($I_A/I_B$) of an intensity ($I_A$) of the main peak (A) to an intensity ($I_B$) of the minor peak (B) is in a range of about 7 to about 9.5.

7. The nickel-based metal oxide of any one of claims 1 to 6, wherein an amount of nickel in the nickel-based metal oxide is in a range of about 60 mol% to about 96 mol% based on a total mole amount of all metals excluding lithium in the nickel-based metal oxide.

8. The nickel-based metal oxide of any one of claims 1 to 7, wherein the metal oxide phase represented by Formula 1 is NiO or $Ni_{0.5}Co_{0.5}O$, and the metal oxide phase represented by Formula 2 is $Ni_6MnO_8$.

9. A nickel-based active material for a lithium secondary battery, the nickel-based active material being a compound represented by Formula 5, wherein the nickel-based active material is a heat-treated product of a mixture of the nickel-based metal oxide of any one of claims 1 to 8 with a lithium precursor, wherein an amount of nickel in the nickel-based active material among all metals other than lithium is about 60 mol% or more:

Formula 5          $Li_a(Ni_{1-x-y-z}Co_xMn_yM_z)O_{2\pm\alpha1}$,

and

wherein, in Formula 5, M is at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), and
$0.95 \leq a \leq 1.1$, $0.6 \leq (1-x-y-z) < 1$, $0 < x \leq 0.4$, $0 \leq y < 0.4$, $0 \leq z < 0.4$, and $0 \leq \alpha1 \leq 0.1$.

10. The nickel-based active material of claim 9, wherein:

(i) X-ray diffraction analysis of the nickel-based active material has a FWHM (003) in a range of about 0.11° to about 0.14° and a ratio FWHM (003)/FWHM (104) in a range of about 0.55 to about 0.83; and/or
(ii) the nickel-based active material is a single crystal having a size in a range of about 1 $\mu$m to about 5 $\mu$m, an agglomerate of primary particles, or a combination thereof, a size of the primary particles being in a range of about 1 $\mu$m to about 5 $\mu$m.

11. A method of preparing a nickel-based metal oxide for a lithium secondary battery, the method comprising:

mixing a nickel-based active material precursor and a lithium precursor to obtain a first mixture, wherein an amount of nickel in the nickel-based active material precursor is about 60 mol% or more based on a total mole amount of metals in the nickel-based active material precursor; and
performing a first heat-treatment on the first mixture in an oxidizing gas atmosphere to obtain a nickel-based metal oxide,
wherein a mixing molar ratio of lithium and all metals excluding lithium in the first mixture is in a range of about 0.2 to about 0.4.

12. The method of claim 11, wherein:

(i) the first heat-treatment is performed at a temperature in a range of about 800 °C to about 1200 °C; and/or
(ii) the nickel-based active material precursor is a metal hydroxide represented by Formula 3 or a metal oxide represented by Formula 4:

Formula 3          $Ni_{1-x-y-z}Co_xMn_yM_z(OH)_2$,

Formula 4          $Ni_{1-x-y-z}Co_xMn_yM_zO$, and

wherein, in Formulae 3 and 4, M is at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), and
$0.6 \leq (1-x-y-z) < 1$, $0 < x \leq 0.4$, $0 \leq y \leq 0.4$, and $0 \leq z \leq 0.4$.

13. A method of preparing a nickel-based active material for a lithium secondary battery, the method comprising:

mixing a nickel-based active material precursor and a first lithium precursor to obtain a first mixture, wherein an amount of nickel in the nickel-based active material precursor is about 60 mol% or more based on a total mole amount of metals in the nickel-based active material precursor;
performing a first heat-treatment on the first mixture in an oxidizing gas atmosphere to obtain a nickel-based metal oxide;
mixing the nickel-based metal oxide and a second lithium precursor to obtain a second mixture; and
performing a second heat-treatment on the second mixture in an oxidizing gas atmosphere,

wherein a mixing molar ratio of lithium and all metals excluding lithium in the first mixture is in a range of about 0.2 to about 0.4, and

a mixing molar ratio of lithium and all metals excluding lithium in the second mixture is in a range of about 0.6 to about 1.1.

14. The method of claim 13, wherein:

(i) the second heat-treatment is performed at a temperature in a range of about 600 °C to about 1000 °C; and/or
(ii) the first heat-treatment is performed at a temperature in a range of about 800 °C to about 1200 °C.

15. A lithium secondary battery comprising a cathode comprising the nickel-based active material of claim 9; an anode; and an electrolyte between the cathode and the anode.

# FIG. 1A

NiO

**FIG. 1B**

$Ni_6MnO_8$

cation vacancy

EP 4 032 861 A1

# FIG. 1C

INTENSITY (a.u.)

DIFFRACTION ANGLE (2θ)

# FIG. 1D

INTENSITY (a.u.)

DIFFRACTION ANGLE (2θ)

# FIG. 1E

# FIG. 1F

# FIG. 1G

Ordered (e.g. layered)

M

Li

O layer

# FIG. 1H

Fully disordered rocksalt

M

Li

O layer

# FIG. 2

# FIG. 3

# FIG. 4

# FIG. 5A

SDI 5.0kV 8.0mm x10.0k SE(M)                    5.00um

# FIG. 5B

SDI 5.0kV 8.0mm x20.0k SE(M)                    2.00um

# FIG. 5C

XRD (0.25)

# FIG. 6A

SDI 5.0kV 8.0mm x10.0k SE(M)    5.00um

# FIG. 6B

SDI 5.0kV 8.0mm x20.0k SE(M)    2.00um

# FIG. 6C

XRD (0.3)

# FIG. 7A

SDI 5.0kV 8.0mm x10.0k SE(M)     5.00um

# FIG. 7B

SDI 5.0kV 8.0mm x20.0k SE(M)     2.00um

# FIG. 7C

# FIG. 8A

SDI 5.0kV 7.9mm x10.0k SE(M)     5.00um

# FIG. 8B

SDI 5.0kV 8.0mm x20.0k SE(M)     2.00um

# FIG. 9A

SDI 5.0kV 8.0mm x10.0k SE(M)          5.00um

# FIG. 9B

SDI 5.0kV 8.0mm x20.0k SE(M)          2.00um

# FIG. 9C

## FIG. 10A

SDI 5.0kV 8.0mm x10.0k SE(M)          5.00um

## FIG. 10B

SDI 5.0kV 8.0mm x20.0k SE(M)          2.00um

EP 4 032 861 A1

# FIG. 10C

XRD (0.7)

Legend:
— 0.7
✗ Ordered rocksalt
■ Rocksalt cubic
○ Layered

INTENSITY (a.u.)

DIFFRACTION ANGLE (2θ) (°)

# FIG. 10D

XRD (0.5)

Legend:
— 0.5
✗ Ordered rocksalt
■ Rocksalt cubic

INTENSITY (a.u.)

DIFFRACTION ANGLE (2θ) (°)

42

# FIG. 11

SDI 5.0kV 8.7mm x20.0k SE(U)      2.00um

FIG. 12

Europäisches
Patentamt

European
Patent Office

Office européen
des brevets

## EUROPEAN SEARCH REPORT

Application Number

EP 21 21 4506

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 3 233352 B2 (TOSHIBA CORP) 26 November 2001 (2001-11-26) | 9,10,15 | INV. C01G53/00 H01M4/525 |
| A | * tables * | 1-8 | |
| X | EP 3 392 936 A1 (GS YUASA INT LTD [JP]) 24 October 2018 (2018-10-24) | 9,10,15 | |
| A | * figures; tables * | 1-8, 11-14 | |
| X | EP 3 428 124 A1 (UMICORE NV [BE]; UMICORE KOREA LTD [KR]) 16 January 2019 (2019-01-16) | 9,15 | |
| A | * examples * | 1-8, 10-14 | |
| X | WO 2019/211357 A1 (UMICORE NV [BE]; SOLVAY [BE]) 7 November 2019 (2019-11-07) | 9,15 | |
| A | * examples * | 1-8, 10-14 | |

| TECHNICAL FIELDS SEARCHED (IPC) |
|---|
| C01G H01M |

The present search report has been drawn up for all claims

| Place of search | Date of completion of the search | Examiner |
|---|---|---|
| Munich | 31 May 2022 | Marucci, Alessandra |

EPO FORM 1503 03.82 (P04C01)

## ANNEX TO THE EUROPEAN SEARCH REPORT
## ON EUROPEAN PATENT APPLICATION NO.

EP 21 21 4506

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2022

| Patent document cited in search report | | Publication date | Patent family member(s) | | Publication date |
|---|---|---|---|---|---|
| JP 3233352 | B2 | 26-11-2001 | JP | 3233352 B2 | 26-11-2001 |
| | | | JP | 2000195514 A | 14-07-2000 |
| EP 3392936 | A1 | 24-10-2018 | CN | 108370036 A | 03-08-2018 |
| | | | EP | 3392936 A1 | 24-10-2018 |
| | | | JP | 6914483 B2 | 04-08-2021 |
| | | | JP | WO2017104688 A1 | 15-11-2018 |
| | | | US | 2018366773 A1 | 20-12-2018 |
| | | | WO | 2017104688 A1 | 22-06-2017 |
| EP 3428124 | A1 | 16-01-2019 | CN | 109256533 A | 22-01-2019 |
| | | | EP | 3428124 A1 | 16-01-2019 |
| | | | HU | E051555 T2 | 01-03-2021 |
| | | | JP | 6568268 B2 | 28-08-2019 |
| | | | JP | 2019021623 A | 07-02-2019 |
| | | | KR | 20190008120 A | 23-01-2019 |
| | | | PL | 3428124 T3 | 08-03-2021 |
| | | | US | 2019020019 A1 | 17-01-2019 |
| WO 2019211357 | A1 | 07-11-2019 | CN | 112042015 A | 04-12-2020 |
| | | | EP | 3788668 A1 | 10-03-2021 |
| | | | JP | 2021520621 A | 19-08-2021 |
| | | | KR | 20210006422 A | 18-01-2021 |
| | | | US | 2021234200 A1 | 29-07-2021 |
| | | | WO | 2019211357 A1 | 07-11-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *J. Mater. Chem, A.,* 2018, vol. 6, 123422-121352